(19) Europäisches Patentamt
European Patent Office
Office européen des brevets

(11) **EP 3 264 397 B1**

(12) **EUROPEAN PATENT SPECIFICATION**

(45) Date of publication and mention
of the grant of the patent:
**16.09.2020 Bulletin 2020/38**

(51) Int Cl.:
*G09C 1/00* (2006.01)          *H04L 9/00* (2006.01)
*H04L 9/06* (2006.01)

(21) Application number: **16176719.9**

(22) Date of filing: **28.06.2016**

(54) **A PROTECTION METHOD AND DEVICE AGAINST A SIDE-CHANNEL ANALYSIS**

SCHUTZVERFAHREN UND VORRICHTUNG GEGEN EINE SEITENKANALANALYSE

PROCÉDÉ ET DISPOSITIF DE PROTECTION CONTRE UNE ANALYSE DES CANAUX AUXILIAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018 Bulletin 2018/01**

(73) Proprietor: **ESHARD**
**33650 Martillac (FR)**

(72) Inventor: **WURCKER, Antoine**
**33140 VILLENAVE D'ORNON (FR)**

(74) Representative: **de Roquemaurel, Bruno et al
OMNIPAT
24 Place des Martyrs de la Résistance
13100 Aix en Provence (FR)**

(56) References cited:
**EP-A2- 1 267 514          US-A1- 2008 019 503
US-A1- 2009 074 181**

- **CHRISTOPH HERBST ET AL: "An AES Smart
Card Implementation Resistant to Power
Analysis Attacks", 1 January 2006 (2006-01-01),
APPLIED CRYPTOGRAPHY AND NETWORK
SECURITY LECTURE NOTES IN COMPUTER
SCIENCE;;LNCS, SPRINGER, BERLIN, DE,
PAGE(S) 239 - 252, XP019034418, ISBN:
978-3-540-34703-3 * section 3; figure 3 ***
- **KOUICHI ITOH ET AL: "DPA Countermeasure
Based on the Masking Method", PROCEEDINGS
OF ICICS. INTERNATIONAL CONFERENCE ON
INFORMATIONCOMMUNICATIONS AND SIGNAL
PROCESSING, XX, XX, 6 December 2001
(2001-12-06), pages 440-456, XP002297044,**

**EP 3 264 397 B1**

**Description**

TECHNICAL FIELD

The present invention relates to a method and device for protecting a circuit or a program against side channel analysis aiming to discover the value of a secret data handled by the circuit or program, and in particular a secret key used by an encryption or decryption algorithm to transform a message.

The present invention relates in particular to smart card integrated circuits or to hardware cryptographic components integrated onto mother boards of computers and other electronic and IT equipment (USB drives, TV decoders, game consoles, etc.) implementing a cryptographic algorithm such as AES (Advanced Encryption Standard). The present invention also relates to a program implementing such an algorithm, provided for being executed in a secure or non-secured environment.

More generally the present invention relates to circuits and software implementing an operation combining two data which are required to be kept hidden.

BACKGROUND

Circuits implementing cryptographic algorithms can comprise a central processing unit (CPU), and possibly a circuit dedicated to cryptographic computing, for example a cryptographic coprocessor. These circuits may comprise thousands of logic gates that switch differently according to the operations executed. These switching operations create short variations in current consumption, for example of a few nanoseconds, and those variations can be measured. In particular, CMOS-type integrated circuits comprise logic gates that only consume current when they switch, i.e. when a logic node changes its state to 1 or to 0. Therefore, the current consumption depends on the data handled by the central processing unit and on its various peripherals: memory, data flowing on the data or address bus, cryptographic coprocessor, etc.

Furthermore, certain software programs using encryption or obfuscation techniques, such as the White-box Cryptography technique, may integrate secret data in such a way that it is very difficult to determine them by reverse engineering. Certain software programs may also receive a secret data from outside through a secure communication channel.

Such circuits may be subjected to so-called side channel analysis attacks based on observing their current consumption, or their magnetic or electromagnetic radiation. Such attacks aim to discover the secret data, in particular encryption keys. Current side channel attacks implement statistical analysis methods such as SPA ("Single Power Analysis"), DPA ("Differential Power Analysis"), CPA ("Correlation Power Analysis") or EMA ("ElectroMagnetic Analysis"). The SPA analysis (ref. [1]) normally only requires the acquisition of a single current consumption trace. It aims to obtain information about the activity of the integrated circuit by observing the part of the consumption trace corresponding to a cryptographic computation, since the current trace varies according to the operations executed and the data handled.

Software may also undergo such side channel attacks during their execution by a circuit.

DPA (ref. [2]) and CPA analyses enable the key of an encryption algorithm to be found by acquiring numerous circuit consumption traces and by statistically analyzing these traces to find the target information. They are based on the premise that the consumption of a CMOS-type integrated circuit varies when a bit changes from 0 to 1 in a register or on a bus, and does not vary when a bit remains equal to 0, remains equal to 1 or changes from 1 to 0 (discharge of a stray capacitance of a MOS transistor). Alternatively, it can be considered that the consumption of a CMOS-type integrated circuit varies when a bit changes from 0 to 1 or changes from 1 to 0 and does not vary when a bit remains equal to 0 or remains equal to 1. This second hypothesis enables the conventional "Hamming distance" or "Hamming weight" functions to be used in order to develop a consumption model that does not require knowledge of the structure of the integrated circuit in order to be applicable. The DPA analysis involves amplifying this consumption difference thanks to statistical processing on numerous consumption traces, aiming to highlight a measurement difference between two families of consumption traces distinguished according to formulated hypotheses.

The CPA analysis (ref. [3]) is based on a linear current consumption model and involves computing a correlation coefficient between, firstly, the consumption points measured that form the captured consumption traces and, secondly, an estimated consumption value, computed from the linear consumption model and a hypothesis on the data to be discovered that is handled by the microcircuit and on the value of the encryption key.

The electromagnetic analysis (EMA) is based on the principle that an integrated circuit may send information in the form of near or far field electromagnetic radiation. Given that transistors and the wires connecting them emit electromagnetic signals when their state changes, these signals can be treated like the current consumption variation signals by an analysis such as one or other of the SPA, DPA and CPA analyses. An example of application of this analysis was made by Jean-Jacques Quisquater in 2001 (ref [4]).

Other side channel analyses exist, such as "Template analysis" (ref. [5]) and "Mutual Information Analysis" (MIA) (ref. [6]). All of the above-mentioned analyses are based on a time alignment of all the analyzed traces. In other words, all the measurements performed at a given time, for example from the time the execution of a command is activated by the circuit, must correspond to the same data handled by the algorithm.

The patent application N° FR16 51443 filed on February 22, 2016 by the Applicant discloses a method for analysing traces representative of the activity of a circuit when the latter executes an operation successively on different input data. This method comprises extracting a part of each trace, and generating a histogram from each extracted trace part, by counting an occurrence number of each possible value appearing in each of the extracted parts of these traces. Partial results of the operation are then computed by applying the operation to each input data and each possible value of a part of a secret key involved in the operation. Then, the method identifies for each possible part value of the secret key, all the input data which provide the same partial result. For each possible part value of the secret key, the occurrence numbers in the histograms, corresponding to the identified input data and the part value of the secret key are then added. The part of the secret key can be determined by subjecting the added occurrence numbers to a statistical analysis. The statistical analysis assumes that if a value related to the secret key has leaked in the extracted parts of the traces, it can be highlighted by the added occurrence numbers.

The patent applications US 2009/074181, US 2008/019503 EP 1 267 514 disclose countermeasures against side channel analyses. The patent applications US 2009/074181 and US 2008/019503 disclose performing an operation on each possible value of one byte stored in a table including a requested input value, such as a cryptographic key, and another input value. The result of the operation is stored in an output table including all possible values of one byte. As being applied to all possible values of a key, with a same probability, the operation is protected against analyses of information leakage during computations. The patent application EP 1 267 514 discloses combining mask values respectively to a plaintext and to a key by XOR operations, the results of the XOR operations being used to perform a substitution operation using a masked table. However, these countermeasures do not resist to the above analysis disclosed by the Applicant.

It may be desirable to propose a protection for an integrated circuit or a software program against one or more of these side channel analyses.

SUMMARY

A method is described for executing by a circuit a requested operation whereby a first input data, is combined with a second input data. The method may include: computing a first input set comprising the first input data, by applying Exclusive OR (XOR) operations to the first input data and to all first mask parameters in a first mask set. According to the invention, the method comprises: generating a second mask set comprising second mask parameters, each first mask parameter in the first mask set forming a respective mask pair with a corresponding second mask parameter in the second mask set, the mask pairs being such that combinations by XOR operations of the first mask parameter with the second mask parameter in each mask pair produce a third mask set comprising third mask parameters, the mask parameters in each of the first, second and third mask sets being such that each mask parameter in the mask set comprises at least one first word, the first words in the mask set having a same size and forming a word subset comprising a single word from each mask parameter in the mask set and a same number of occurrences of all possible values of a word having the size of the first words; computing a second input set comprising the second input data, by applying XOR operations to the second input data and to all second mask parameters in the second mask set, each data in the first input set being associated with a respective data in the second input set in a respective input pair, such that the mask parameters from which each data in each input pair is computed are associated by one of the mask pairs; applying the requested operation to each input pair to compute output data; and providing an output set of the operation comprising all the computed output data.

According to an embodiment, the requested operation is an Exclusive OR.

According to an embodiment, the first and second mask sets are generated from a first pair of first and second permutations of words, each comprising a same number of occurrences of all possible values of the words, such that the combination by XOR operations of each word in the first permutation with a respective word of the second permutation provide a resultant permutation comprising words, and the same number of occurrences of all possible values of the words, the first and second mask sets being generated using the following equations:

$$U1[I] = PM(u1[I] \oplus UR),$$

and

$$V1[I] = PM(v1[I] \oplus VR),$$

or

$$U1[I] = PM(u1[I]) \oplus UR,$$

and

$$V1[I] = PM(v1[I]) \oplus VR,$$

for each index I, where UR and VR are random words of the size of any of the masks parameters U1[I] or V1[I], u1 and v1 are previously computed sets obtained by the equations, or equal to the mask sets of the first pair respectively, and PM is a randomly selected permutation applied to the sets u1 and v1.

According to an embodiment, each second input data in the second input set is selected in a respective masked substitution table by a substitution operation, the masked substitution tables being generated from an input substitution table and comprising one masked substitution table for each of the first mask parameters in the first mask set and the corresponding second mask parameter in the second mask set.

According to an embodiment, the masked substitution tables are generated by: generating the first mask set; generating the second mask set comprising a number of second mask parameters equal to the number of values in the input substitution table; selecting once each mask parameter in the first and second mask sets to form mask pairs, each comprising one of the first mask parameters and one of the second mask parameters; generating for each mask parameter in the first mask set one of the masked substitution table, the generation of each of the masked substitution tables comprising: selecting each data in the input substitution table, and for each selected data: computing a masked data by applying XOR operations to the selected data and to the second mask parameter corresponding to the first mask parameter or to a transformed value thereof; computing a masked index by applying XOR operations to an original index and to the first mask parameter or a transformed value thereof; and storing the masked data in the masked substitution table, the selected data being selected at the original index and the masked data being stored at the masked index, or the selected data being selected at the masked index and the masked data being stored at the original index.

According to an embodiment, the computations of the data in the output set are performed in a random order.

According to an embodiment, each output data in the output set comprises at least one word, the words in the output set having a same size and forming a an output word subset comprising a single word from each output data in the output set and a same number of occurrences of all possible values of the words, the method comprising: detecting in the output word subset a word having a number of occurrences different from the number of occurrences of other words in the output word subset, an error being detected when two words with different numbers of occurrences are found the word output subset, or combining by XOR operations each data in the output set with a respective mask parameter of a resultant mask set such the output set comprises data resulting from applying XOR operations to an output data of the requested operation applied to the first and second input data and to each mask parameter of the resultant mask set, an error being detected when XOR operations applied to two data in the output set provide different data.

According to an embodiment, the first input data is generated by operations comprising a bit permutation operation by which bits of an input data are mixed, the method comprising applying the bit permutation operation to all data in a third input set in which each data in combined by XOR operations to one the first mask parameters in the first mask set, an output of the bit permutation operation comprising an output set comprising all data resulting from the application of the bit permutation operation to one of the data in the third input set, the first mask set being generated so that: each data in the output set of the bit permutation operation comprises at least two words, the words in the output set having a same size and forming an output word subset comprising a single word from each data in the output set and a same number of occurrences of all possible values of the words in the output word subset.

Embodiments may also relate to a method for encrypting or decrypting an input data according to a cryptographic algorithm comprising an operation combining a first and a second input data, wherein the operation is performed according to the above-defined method.

According to an embodiment, the cryptographic algorithm conforms with the Advanced Encryption Standard (AES) algorithm, the method comprising: generating an input set by applying XOR operations to each word of the input data, to each mask parameter of the first mask set, and to a word of a secret key corresponding the word of the input data; performing several intermediate rounds, each comprising: performing a substitution operation using masked substitution tables providing a substitution output set in which each word is masked by a respective mask parameter of the second mask set, computing a masked round output set by applying XOR operations to each word of a round set masked by a respective mask parameter of the second mask set, to a respective mask parameter of the first mask set and to a respective mask parameter of the second mask set, and using the masked round output set as an input set for a next round; providing an output set in which each word is masked by a respective mask parameter of the first mask set.

According to an embodiment, the cryptographic algorithm conforms with the Advanced Encryption Standard (DES) algorithm, the method comprising: generating an input set by applying XOR operations to each word of a result data provided by an initial bit permutation operation, and to each mask parameter of the first mask set; performing several intermediate rounds, each comprising: performing an expansive bit permutation applied at a first round to the input set and at subsequent rounds to a round output set, the first mask set being generated so that each data in a bit permutation output set of the bit permutation operation comprises at least two words, the words in the output set having a same size and forming an output word subset comprising a single word from each data in the output set and a same number of occurrences of all possible values of the words in the output word subset; performing a substitution operation using masked substitution tables providing a substitution output set in which each word is masked by a respective mask parameter of the second mask set, computing a masked round output set by applying XOR operations to each word of a round set masked by respective mask parameters of the first and second mask sets, and to a respective mask parameter of the second mask set; and providing an output set in which each word is masked by a respective mask parameter of the first mask set.

Embodiments may also relate to a circuit comprising a processor and configured to implement the methods as above defined.

According to an embodiment, the circuit comprises a coprocessor.

Embodiments may also relate to a device comprising a circuit as above-defined, arranged on a medium.

Embodiments may also relate to a computer program product loadable into a computer memory and comprising code portions which when executed by a computer configure the computer to carry out the steps of the methods as above-defined.

BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 represents a conventional architecture of a secure circuit;
Figure 2 is a block diagram of a circuit protected according to one embodiment;
Figure 3 is a flow-chart of protection steps transforming an input data according to one embodiment;
Figure 4 is a block diagram illustrating protection steps, according to an embodiment;
Figures 5 to 7 are block diagrams illustrating an operation performed by the circuit of Figure 2;
Figure 8 is a block diagram of the AES encryption algorithm, including protection steps according to one embodiment;
Figure 9 is a flowchart of an operation protected according to one embodiment;
Figures 10A, 10B, 10C are block diagrams of substitution tables, illustrating a method for protecting a substitution table, according to various embodiments;
Figure 11 is a block diagram of a conventional mix column operation in the AES encryption algorithm,
Figure 12 is a block diagram of an AES mix column circuit of a protected AES encryption circuit, according to one embodiment;
Figure 13 is a flowchart of a method for generating a protected substitution table, according to different embodiments;
Figure 14 is a flowchart of a substitution operation protected according to one embodiment;
Figure 15 is a flowchart of an XOR operation protected according to one embodiment;
Figure 16 is a block diagram of the DES encryption algorithm, including protection steps according to an embodiment;
Figure 17 is a flowchart of a method for generating a protected substitution table, according one embodiment;
Figure 18 is a flow-chart of protection steps transforming an input data according to another embodiment;
Figure 19 is a block diagram of an intermediary data set obtained when executing the DES algorithm, according to one embodiment;
Figure 20 is a block diagram illustrating operations of the DES algorithm, according to one embodiment;
Figure 21 is a flowchart of an XOR operation protected according to one embodiment;
Figures 22 and 23 are blocks diagrams representing a circuit implementing the DES encryption algorithm, according to different embodiments;
Figure 24 is a block diagram representing a secure circuit, according to another embodiment.

DETAILED DESCRIPTION

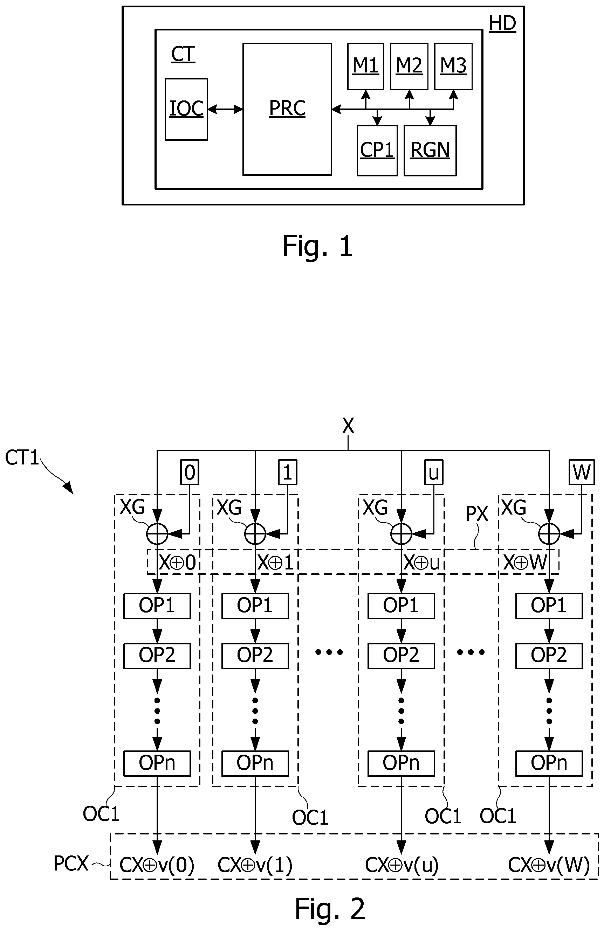

Figure 1 represents, as an example, a secure integrated circuit CT, for example arranged on a portable medium HD such as a plastic card or any other medium, or in a terminal such as a mobile terminal. The integrated circuit comprises a microprocessor PRC, an input/output circuit IOC, memories M1, M2, M3 coupled to the microprocessor by a data and address bus and, optionally, a cryptographic computation coprocessor CP1 or arithmetic accelerator, and a random number generator RGN. The memories can comprise a volatile memory M1, for example a RAM-type ("Random Access Memory") memory containing volatile application data, a non-volatile memory M2, for example an EEPROM or Flash memory, containing non-volatile data and application programs, and possibly a read-only memory M3 (or ROM memory) containing the operating system of the microprocessor. The operating system can also be stored in the non-volatile memory.

The communication interface circuit IOC may be of contact type, for example according to the ISO/IEC 7816 standard, of contactless type with inductive coupling, for example according to the ISO/IEC 14443A/B or ISO/IEC 13693 standard, of contactless type by electrical coupling (UHF interface circuit), or of both contact and contactless type. The interface circuit IOC may also be coupled through a specific interface, to another circuit such as an NFC controller, or a main circuit of a terminal such as a mobile terminal or a connected object.

In some embodiments, the integrated circuit CT may be configured to execute operations of encrypting, decrypting or signing messages that are sent to it, by means of a cryptographic function. This cryptographic function may be executed by the processor PRC of the circuit CT or partially or totally carried out by the processor PRC to the coprocessor CP1.

It is proposed here to protect an operation, e.g. an operation in a cryptographic algorithm against side channel analysis. In this context, the operation receives an input data, and provides an output data as a function of the value of the input data. A protection according to one embodiment involves executing the operation to be protected for all the data of an input set comprising the input data required to be processed by the operation, each data in the input set comprising at least one word, the words in the input set having the same size and forming a word subset or column comprising a single word from each data in the input set and a same number of occurrences of all the possible words in relation with the size of the words. Another protection involves providing as result of the operation an output set comprising the expected output data, each data comprises at least one word, the words in the output set having the same size and forming a word subset or column comprising a single word from each data in the output set and the same number of occurrences of all the possible words in relation with the size of the words.

In the following, "word" designates a group of bits in a data, and "word column" designates a subset in a data set comprising a single word from all data in the data set, all the words in the word column having the same size. The words forming a word column are not necessary aligned, i.e. do not necessary comprises the same bit positions in the data of the data set.

Figure 2 represents a circuit CT1 receiving an input data X to be processed and serially performing several operations OP1, OP2, ... OPn applied to the input data X. According to an embodiment, the circuit CT1 comprises several circuits OC1 each serially performing the operations OP1, OP2, ... OPn. Each circuit OC1 receives the input data X and a respective input mask parameter u of an input mask parameter set. Thus the circuit CT1 comprises W+1 circuits OC1 respectively receiving masks equal to 0, 1 ... W, W representing the greatest possible value of the mask parameter u when considering the size in bits of the mask parameter. Each circuit OC1 comprises a circuit XG applying Exclusive OR operations (XOR) to the input data X and to the mask parameter u (=0 or 1, ... or W). In each circuit OC1, the data $X \oplus u$ ($u = 0, ... W$) provided by the circuit XG is applied to an input of the operation OP1. The operations OP1-OPn are such that:

$$OPn(\ldots OP2(OP1(X \oplus u))\ldots) = CX \oplus v(u), \qquad (1)$$

where "$\oplus$" represents the XOR operator, $v(u)$ represents an output mask parameter depending on the input mask parameter u and CX is the result of the operations OP1-OPn applied to the input data X:

$$CX = OPn(\ldots OP2(OP1(X))\ldots). \qquad (2)$$

Thus each circuit OC1 provides an output data equal to $CX \oplus v(u)$ ($u=0, 1, ..., $ or W). Therefore, the circuit CT1 provides an output set PCX comprising the output data $CX \oplus v(0)$, $CX \oplus v(1)$, ... $CX \oplus v(u)$, ... $CX \oplus v(W)$. The operations OP1-OPn can be adapted such that the output data corresponding to the input data $X \oplus u$ provided by the operations OP1-OPn is equal to $CX \oplus v(u)$ for each value of the mask parameter u (0-W) and the set of output mask parameters $v(u)$ with $u=0$

to W, comprises a same number of occurrences of all possible values when considering the size of the output masks parameters v(u). Each output mask parameter v(u) can be equal to the corresponding input mask parameter u. According to an embodiment, the computations of the output data in the output set PCX may be performed in a random order, and/or stored in a random order. In this way, the different values of the mask parameter u are respectively applied to the circuits OC1 in a random order. Thus the circuit OC1 of rank k in the circuit CT1 receives an input mask parameter u = U[k], U being a mask set generated by random permutation of all possible numbers between 0 and W. In the same way, the circuit OC1 of rank 0 in the circuit CT1 receives a mask parameter U[0], and the circuit OC1 of rank W in the circuit CT1 receives an input mask parameter U[W].

In addition, the circuits OC1 are independent from each other and the computation of each of the data CX⊕v(u) of the output set PCX is independent from the computations of the other data of the output set. Therefore the operations OP1-OPn in all the circuits OC1 can be performed in any order, provided that the order of the operations within each circuit OC1 is respected.

Unlike the protections of prior art involving hiding the operation to be protected in a flood of identical operations applied to random data and thus uncorrelated from the required input data of the operation to be protected, the idea here is to execute the operation on other data not chosen randomly. Indeed, such other data are correlated to the required input data insofar as the input set formed of such other data and of the required data to be processed, comprises all possible data having the size of the data susceptible of being processed by the operation, with a same number of occurrences. Of course the input data to be processed by the operation should have an unpredictable position in the input set, but known by the circuit performing the operation.

The input set may be obtained by combining the required input data X by a logical XOR operations with a mask parameter U[I] of a mask set U comprising for example all possible values of one byte (between 0 and 255). Thus if the input data X has the size of one byte, the input set comprises 256 data equal to $X \oplus U[I]$ where U[I] = 0 to 255, and the required input data $X = PX[n] = X \oplus U[n]$, with U[n]= 0 ("⊕" representing the XOR operator applied to bytes). When the input data is encoded on one byte, an operation can be protected according to one embodiment by applying the operation to all the data in the input set comprising the data $PX[I] = X \oplus U[I]$, with I = 0 to 255, i.e. all possible data having the size of one byte. The computations of the output data in the output set may be performed in a random order. To this purpose, the data in the input set can be arranged in a random order.

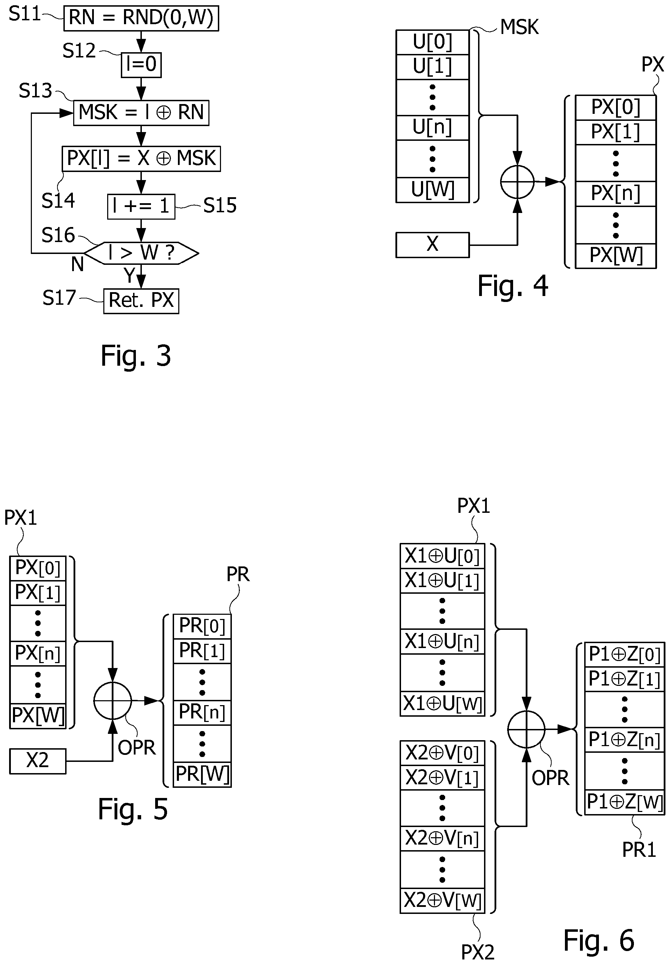

Figure 3 represents steps S11 to S17 of a procedure for generating an input set PX comprising an input data X, according to one embodiment. Steps S11 to S16 are executed successively. In step S11, a variable RN receives a random value between 0 and a maximum value W determined according to the size defined by the number of bits used to encode the input data X in binary code. Thus, for a variable RN encoded on b bits, the maximum value W equals $2^b-1$. If the variable RN is encoded on 8 bits, the value W equals 255. If the variable RN is encoded on 16 bits, the value W equals $2^{16}-1$ (=65535). In step S12, an index I is set to 0. In step S13, a mask parameter MSK (= I⊕RN) is computed by applying XOR operations to the index I and to the variable RN. In step S14, an input data PX[I] designated by the index I in a table forming the input set PX is computed by applying XOR operations to the input data X, and to the mask parameter MSK. Figure 4 represents the input data X, the different values U[0] (=0⊕RN), U[1] (=1⊕ RN), ... U[W] (=W⊕RN) of the mask parameter MSK and the different data PX[0], PX[1]), ... PX[W] of the input set PX.

At step S15, the index I is incremented by one (1). At step S16, the index I is compared with the maximum value W, and if it is greater than the value W, step S17 is executed, otherwise a new iteration of the calculation is executed in steps S13 to S16. At step S17, the table PX is provided as an output of the procedure S11-S17, the expected input data being in the table PX at an index n (X = PX[n]), this index n having a value such that the mask parameter U[n] = 0. Indeed, the result of XOR operations applied to data D and 0 does not transform the data D.

It shall be noted that values of the mask parameter MSK can be processed in a random order and not necessarily in the order from 0⊕RN to W⊕RN. Several operations can be applied to the input set PX to compute an output set. The expected output data can be extracted at a known index n from an output set at a subsequent step in the processing, for example considered less sensitive to side channel analysis.

Further, the input data X can be encoded on several binary words having a same number of bits. The mask parameter MSK also has the same number of bits as the data X. If the input data is encoded on one byte (8-bit words), the mask parameter MSK can be also encoded on 8 bits. The number of iterations W+1 that must be executed between steps S13 to S16 is equal to $2^b$, b being the size in number of bits of the data X. If the data X is encoded on one word of 16, 32 or 64 bits, it may be desirable to limit this number of iterations. If the operations applied to the input data are performed byte per byte, the mask parameter mask parameter MSK may be encoded on 8 bits, and the mask parameter MSK can be combined with the input data X at step S14 by concatenating the mask parameter MSK with itself several times to form a word of the size of the input data X. Therefore, in the event that the data X is encoded on 16 bits, the mask parameter MSK encoded on 8 bits can be concatenated with itself to obtain a word on 16 bits. The operation executed in step S14 then becomes:

$$PX[I] = X \oplus MSK//MSK, \qquad\qquad (3)$$

"//" representing the concatenation operator of binary words. In the event that the data X is encoded on 32 bits, each value of the mask parameter MSK encoded on 8 bits is concatenated with itself three times to obtain a word on 32 bits. The operation executed in step S14 then becomes:

$$PX[I] = X \oplus MSK//MSK//MSK//MSK. \qquad\qquad (4)$$

In fact, the mask parameter MSK used as a mask can have the size of the words processed by the considered operation in the algorithm.

In addition, the concatenated values of the mask parameter MSK can be different from each other:

$$PR[i] = OPR(X, KY \oplus MSK1//MSK2//MSK3//MSK4). \qquad (5)$$

provided that the indexes where MSKj = 0 (j = 1, 2, 3, 4) are stored.

Figure 5 illustrates the application of an operation such as XOR to a protected data X1 and a non-protected data X2, the data X1, X2 having the size of one or several words. Thus the data X1 is represented by an input set PX1 comprising data PX[0], PX[1], ... PX[W], each of these data having the same size as the input data X1, with W = $2^b$-1 where b is the size of the words within the input data. The required data X1 is at index n in the input set PX1: X1 = PX[n], n being an integer number between 0 and W. The result of the operation is an output set PR comprising W+1 output data PR[0], PR[1], ... PR[W], wherein each data PR[j] (j=0, ...W), equals PX[j]⊕X2. The expected result of the operation PR[n] (= PR[n]⊕X2 = X1⊕X2) is at the same index n in the table PR as the required input data X1 in the table PX1. As comprising W+1 data between 0 and W (as the input set PX1), the resulting output set PR provides the same level of protection of the expected result PR[n] as the input set PX1.

Problems may arise when two protected data X1, X2 used in a cryptographic algorithm are combined by an operation such as XOR, the data X1, X2 being protected by being replaced by input sets of data PX1, PX2. Each of the input sets PX1, PX2 can also comprise all possible data depending on the size of the input data X1, X2, or a word thereof, defined by applying a set of mask parameters in the form of U[I]//... //U[I], with I = 0, ... W, U[I] having the size of a word, the input data being processed word by word. Figure 6 represents the sets of input data PX1, PX2. The input set PX1 comprises the data PX1[0], ... PX1[W], the required input data X1 (=PX1[n]) being at the index n. In a same way, the input set PX2 comprises the data PX2[0], ... PX2[W], the required input data X2 (=PX2[n]) being at the same index n.

The input sets PX1 and PX2 are generated by applying different mask values to the required input data X1 and X2:

PX1[j] = X1⊕Uj, for all values of the index j in {0, ..., W}, and
PX2[j] = X2 ⊕ Vj, for all values of the index j in {0, ..., W}.

Thus, a first way to protect the operation (X1 ⊕ X2) could be by computing (PX1[j] ⊕ PX2[j]) for all values of the index j between 0 and W:

$$(X1 \oplus Uj) \oplus (X2 \oplus Vj) = (X1 \oplus X2) \oplus (Uj \oplus Vj). \qquad (6)$$

In fact, it cannot be ensured that the data Uj⊕Vj are different from one another for each value of the index j. It may occur that Uj = Vk and Uk = Vj for particular values of indexes j and k, leading to a set of masking values Uj⊕Vj comprising two identical values Uj⊕Vk = Uk⊕Vj. Thus the output set PR does not satisfy the condition of comprising all possible data values (between 0 and W when X1 and X2 are encoded on one byte). In an extreme case, Uj and Vj have the same value for each index value j. Therefore:

$$(X1 \oplus Uj) \oplus (X2 \oplus Vj) = (X1 \oplus X2) \oplus 0 = X1 \oplus X2. \qquad (7)$$

As a result, each of the W+1 computations returns the same result X1⊕X2 which is the expected output result. Not only is the expected result not protected, but also this solution generates a heavy leakage on the expected result since the operation to be protected is performed W+1 times.

Another way to generate protected output data could be to select one data in one of the input sets PX1, PX2 and to apply the operation to this selected data and to all the data of the other set of input data. Thus, for example, the data PX2[k] is selected in the set PX2 and combined with all the data in the input set PX1. Therefore, each resulting data PR2[j] in the output set PR2 is computed as follows:

$$PR2[j] = PX1[j] \oplus PX2[k], \tag{8}$$

with j = 0, 1, 2, ... W, and k having a fixed value. By doing this, it is ensured that the output set PR2 does not comprise two identical data PR2[j]:

$$PX1[j] \oplus PX2[k] = (X1 \oplus Uj) \oplus (X2 \oplus Vk) = (X1 \oplus X2) \oplus Uj \oplus Vk. \tag{9}$$

in which Uj⊕Vk is different from Uj'⊕Vk if Uj is different from Uj'. However, the computation of the result data PR2[j] in the output data PR2 requires reading a single data PX2[k] in the data set PX2, whereas all the data in the input set PX1 are read. In some circumstances, such an unbalanced processing could generate leakages enabling the disclosure of the data PX2[k]. If the chosen data PX2[k] is equal to the required input data X2 (=PX2[n]), then the leakage may enable the disclosure of the value of the data X2. If another data PX2[k] (k ≠ n) in the set PX2 is chosen to be combined with all the data PX1[j] of the set PX1, it is necessary to store the value of the mask Uk such that the chosen data PX2[k] = X2⊕Uk.

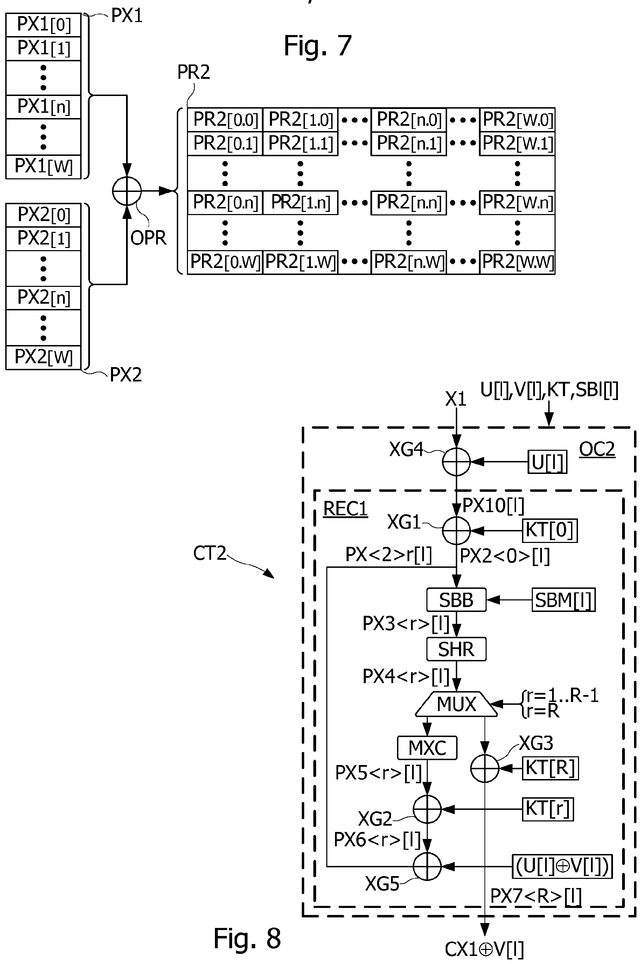

Another way to generate a protected output data, according to one embodiment, is illustrated in Figure 7. In Figure 7, an output set PR2 of the operation X1⊕X2 comprises (W+1)(W+1) output data PR2[i.j], such that:

$$PR2[i.j] = PX1[i] \oplus PX2[j], \tag{10}$$

Where the indexes i and j have each all possible integer values between 0 and W. However this solution requires to perform (W+1)(W+1) computations.

According to one embodiment illustrated by Figure 6, each data PX1[I] in the input set PX1 and each data PX2[I] in the input PX2 are computed as follows:

$$PX1[I] = X1 \oplus U[I] \text{ and } PX2[I] = X2 \oplus V[I] \tag{11}$$

U and V being mask tables comprising mask parameters U[I] and V[I], I = 0, ... W, such that each column of words in each table U and V comprises the same number of occurrences of all possible values of a word of the column. In addition, the tables U and V are such that the combination U[I]⊕V[I] for all the values of the index I from 0 to W, provides a mask set Z comprising at least one word column, each word column of the mask set Z comprising the same number of occurrences of all possible values of a word of the column.

According to an embodiment, one or several pairs (U0, V0) of mask tables U0 and V0 are stored in the circuit CT1, each pair (U0, V0) being tested as providing a table Z such as each value Z[I] = U0[I]⊕V0[I]), each word column of the mask set Z comprising the same number of occurrences of all possible values of a word having the size of the considered words. The circuit CT1 is configured to derive pairs of mask tables (u2, v2) as follows:

$$u2[I] = PM(u1[I] \oplus UR), \text{ and}$$
$$v2[I] = PM(v1[I] \oplus VR), \tag{12}$$

or

$$u2[I] = PM(u1[I]) \oplus UR, \text{ and}$$
$$v2[I] = PM(v1[I]) \oplus VR, \tag{13}$$

for each index I, where UR and VR are random words of the size of any of the masks parameters U[I] or V[I], u1 and v1 are previously computed tables obtained by the equations (12) or (13), or equal to U0 and V0 respectively, and PM is a randomly selected permutation applied to the elements of the tables U1 and V1. It can be proved that each pair (u2, v2) computed using the equation (12) or (13) has the property of providing a table Z such that each word column of the mask table Z comprises the same number of occurrences of all possible values of a word having the size of the considered words. Therefore, by an appropriate choice of the mask sets U and V respectively used for generating the input sets PX1, PX2 from the input data X1, X2, the computation method illustrated in Figure 6 can provide a resultant output set PR1 protecting the output data X1⊕X2 with a same level of protection as the input sets PX1, PX2 for the input data X1, X2.

All the operations performed in the AES (Advanced Encryption Standard) algorithm either implemented by software or in hardware can be protected using the method previously disclosed. Figure 8 represents an example of a cryptographic calculation circuit CT2 implementing the AES algorithm for encrypting a data. For further details about the AES, the document "Advanced Encryption Standard FIPS PUB 197" published on 26th November 2001 can be referred to. In Figure 8, the cryptographic calculation circuit CT1 receives a data X1 to be encrypted and a round key table KT comprising all necessary round keys derived from a secret key. The circuit CT1 supplies an encrypted data CX1. The circuit CT1 comprises circuits XG1, XG2, XG3 performing XOR operations, a substitute calculation circuit SBB, a row-based circular permutation calculation circuit SHR, a column-based permutation calculation circuit MXC, and a multiplexer MUX. The circuits SBB, SHR, and MXC are compliant with the AES. The circuit XG1 receives the data X1 to be encrypted and a first round key KT[0]. The output of the circuit XG1 is supplied to the circuit SBB. One output of the circuit SBB is supplied to the circuit SHR. One output of the circuit SHR is supplied via the multiplexer MUX either to the circuit MXC or to an input of the circuit XG3 receiving at a key input a last round key KT[R]. One output of the circuit MXC is connected to an input of the circuit XG2 receiving at a key input a round key KT[r] for the round r. One output of the circuit XG2 is connected to the input of the circuit SBB. At a last round R, when a certain number of calculation rounds have been performed (10, 12 or 14, in accordance with AES) by the chain comprising the circuits SBB, SHR, MXC, and XG2, the multiplexer MUX is actuated to provide the output of the circuit SHR to the circuit XG3 which supplies the output data CX1.

During a first calculation round, the data X1 is processed by the circuit XG1 which adds (XOR) to it the first round key KT[0]. The circuit XG1 provides the resulting data X1⊕KT[0] which is processed successively by the circuits SBB, SHR, MXC and XG2. Then the circuit XG2 combines the data provided by the circuit MXC with the next round key KT[r]. The circuits SBB, SHR MXC and XG1 are successively activated for several rounds R of the AES algorithm. The substitute calculation circuit SBB is generally implemented using a substitution table.

According to one embodiment, the circuit CT2 has the architecture of the circuit CT1 (Figure 2). Thus, the circuit CT2 comprises W+1 circuits OC2, i.e. one circuit OC2 for each data in an input data set processed by the circuit CT2. Each circuit OC2 comprises the circuits XG1, XG2, XG3, SBB, SHR, MXC and MUX. Each circuit OC2 further comprises circuits XG4 and XG5. The circuit XG4 receives the input data X1 and is connected to the input of the circuit XG1. The circuit XG5 is connected to the output of the circuit XG2 and to the input of the circuit SBB. Each circuit OC2 receives respective mask parameters U[I], V[I] from mask tables U and V, and a respective masked substitution table SBM[I].

According to an embodiment, a masked substitution table SBM[I] is computed for each circuit OC2, using the following equation:

$$SBM[I, i \oplus U[I]] = SBX[i] \oplus V[I], \qquad (14)$$

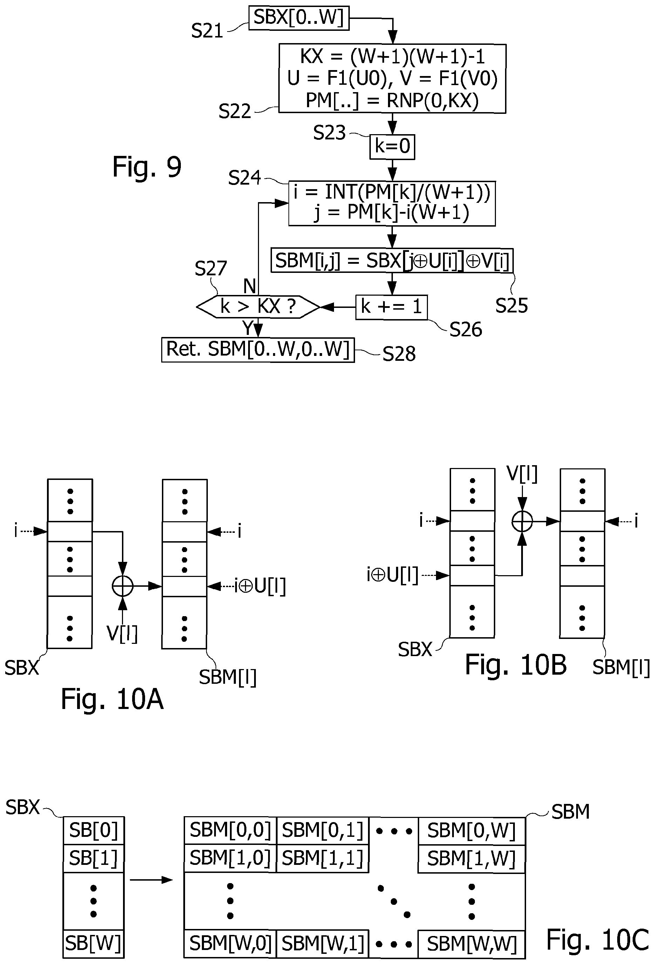

where SBX is the substitution or lookup table, i is an index for selecting a value SBX[i] in the table SBX and U[I] and V[I] are input and output masks respectively. Figure 10A represents the substitution table SBX and the masked table SBM[I] derived from the table SBX by applying equation (14) to each value SBX[i] in the table SBX. Thus, the result of the substitution operation applied to a masked input data D⊕U[I] is an output data masked by the known output mask V[I]. As illustrated in Figure 10B, the masked substitution table SBM[I] can also be obtained by applying the following equation:

$$SBM[I, i] = SBX[i \oplus U[I]] \oplus V[I], \qquad (15)$$

to each value SB[i] of the substitution table SB.

Figure 9 represents steps S21 to S28 of a procedure for computing the masked substitution tables SBM from the AES substitution table SBX, according to one embodiment. Steps S21 to S27 are first successively carried out. At step S21, the substitution table SBX is input. At step S22, the mask tables U and V are generated. According to an embodiment, the mask tables U and V are generated using the equation (12) or (13). Each of the permutations U and V comprise W+1 values between 0 and W, where W+1 is the number of values in the table SBX. One permutation PM in the form of a table is randomly generated using a random permutation generation function RNP. The permutation PM comprises (W+1)(W+1) values between 0 and a maximum value KX equal to (W+1)(W+1)-1. At step S23, an index k is initialized to zero (0). At step S24, indexes i and j are computed from the index k by considering that the permutation PM is a two-entry table comprising rows of W+1 elements and columns of W+1 elements. Thus the index i can be computed as being the integer part of the division of the value PM[k] by (W+1), and the index j can be computed as being the difference between the value PM[k] and the product of the index i by (W+1). Step S25 computes the table values SBM[i,j] randomly selected in the table SBM, using the random permutation PM. Each value SBM[i,j] at indexes i and j in the table SBM is set to the result SBX[[j⊕U[i]]⊕V[i] of XOR operations applied to the data SB[j⊕U[i]] and V[i], the mask parameters U[i] and V[i] being also randomly selected in the tables U and V since the indexes i and j are defined using the permutation PM. At step S26, the index k is incremented by one (1). At step S27, the index k is compared with the maximum value KX. If the index k is greater than the value KX, step S28 is carried out, otherwise steps S25 to S27 are again carried out for a new iteration. At step S28, the masked table SBM is completely defined and provided as output of steps S21 to S27. The substitution table SBX and the masked substitution tables SBM are represented in Figure 10C. It can be noted that the use of the permutation PM is not mandatory, and the values of the tables SBM can be computed in a deterministic order.

The circuit XG4 of each of the circuits OC2 combines the input data X1 with the mask parameter U[I] by XOR operations. The circuits XG4 together execute the steps S11 to S17 of Figure 3, each of the (W4+1) (=16) bytes of the input data X1 being combined with a respective mask parameter U[I] having the size of one byte, for each mask parameter of the mask set U (I = 0, ... W). Each of the circuits XG4 provides an input data PX10[I] = X1⊕ U[I].

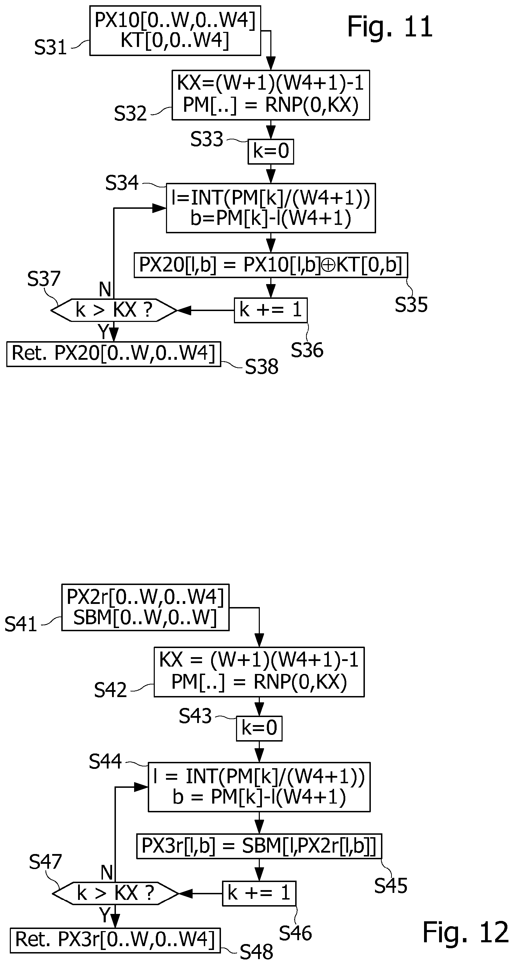

The circuit XG1 of each circuit OC2 combines the data PX10[I] with the round key KT[0] by XOR operations. The circuits XG1 together execute the steps S31 to S37 of Figure 11, each of the 16 bytes of the input data X1 being combined with a respective byte of the first round key KT[0]. Figure 11 represents steps S31 to S38 of a procedure for generating an output set PX2<0> resulting from the application of an operation to an input set PX10 and the round key KT[0], according to one embodiment. Steps S31 to S37 are first successively carried out. At step S31, the output set PX2<0> and the round key KT[0] comprising W4+1 ($2^4$=16) words are input. At step S32, a permutation PM in the form of a table is randomly generated using the function RNP, the permutation PM comprising (W+1)(W4+1) values between 0 and a maximum value KX=(W+1)(W4+1)-1, where W+1 = $2^P$, P (=8) being the number of bits of each of the words KT[0,b] forming the round key KT[0]. At step S33, an index k is initialized to zero (0). At step S34, indexes I and b are computed from the index k by considering that the permutation PM is a two-entry table comprising rows of W4+1 elements and columns of W+1 elements. Thus the index I can be computed as being the integer part of the division of the value PM[k] by (W4+1), and the index b can be computed as being the difference between the value PM[k] and the product of the index I by (W4+1). Step S35 computes output data PX2<0>[I,b] of the output set PX2<0> in the form of a two-entry table. Each output data PX2<0>[I,b] at indexes I and b is set to the result PX10[I,b]⊕KT[0,b]) of XOR operations applied to the words PX2<0>[I,b] and KT[0,b]. Thanks to the use of the permutation PM, the output data PX2<0>[I,b] in the output set PX2<0> are computed in a random order and arranged in the output set PX2<0> also in a random order. At step S36, the index k is incremented by one (1). At step S37, the index k is compared with the maximum value KX. If the index k is greater than the value KX, step S38 is carried out, otherwise steps S35 to S37 are again carried out for a new iteration. At step S38, the output set PX<2>0 is completely defined and provided as output of steps S31 to S37. It can be observed that each data PX2<0>[I] (of size W4+1 bytes) in the output set PX2<0> is the result of the operation PX10[I]⊕KT[0] where PX10[I] = X1 ⊕U[I]. Then PX2<0>[I] = (X1⊕KT[0])⊕U[I]. Therefore the mask U[I] applied to the input value X1 can be retained throughout the computations performed by the operation XG1 in the circuits OC2.

Here again, it is not necessary to compute the data in the output set PX2<0> in a random order or to store them in a random order. In such cases, the use of the permutation PM is not mandatory.

The circuit SBB of each of the circuits OC2 receives the data PX2<r>[I] from the output set PX2<0> or the data PX2<r>[I] from an output set PX2<r> resulting from a previous computation round r, and the masked substitution table SBM[I]. The circuits SBB together execute the steps S41 to S47 of Figure 12, each of the W4+1 bytes of each data PX2<r>[I] of the set PX2<r> (r = 0, 1, ...) being used as an index to select an input data in one of the substitution tables SBM. Figure 12 represents steps S41 to S48 of a procedure performing a protected substitution operation, using the masked substitution tables SBM, according to one embodiment. Steps S41 to S47 are first successively carried out. At step S41 the masked substitution table SBM and the set PX2<r> are input. The set PX2<r> comprises words PX2<r>[0,0], ... PX2<r>[W,W4]. At step S42, a permutation PM in the form of a table is randomly generated using the function RNP. The permutation PM comprises (W+1)(W4+1) values between 0 and the maximum value KX equal to (W+1)(W4+1)-1. At step S43, an index k is initialized to zero (0). At step S44, indexes I and b are computed as in step S4, At step S34, indexes I and b are computed from the index k by considering that the permutation PM is a two-entry table comprising rows of W4+1 elements and columns of W+1 elements. Thus the index I can be computed as being the integer part of the division of the value PM[k] by (W4+1), and the index b can be computed as being the difference between the value PM[k] and the product of the index I by (W4+1). Step S45 computes the output data PX3<r>[I,b] randomly selected in the output set PX3<r>, using the random permutation PM. Each output byte PX3<r>[I,b] at indexes I and b is set to the value of the data SBM[I,PX2<r>[I,b]] selected in the table SBM[I] at an index defined by the data PX2<r>[I,b] selected in the set PX2<r> at indexes I and b. At step S46, the index k is incremented by one (1). At step S47, the index k is compared with the maximum value KX. If the index k is greater than the value KX, step S48 is carried out, otherwise steps S44 to S47 are again carried out for a new iteration. At step S48, the output set PX3<r> is completely defined and provided as output of steps S41 to S47.

The set PX3<r> provided by the circuits SBB in the circuits OC2 comprises data PX3<r>[I] equal at the first round (r=0) to SBX[X1⊕KT[0]]⊕ V[I] (I=0, ...W). The circuits SHR of the circuits OC2 process the set PX3<r> and provide an output set PX4<r>. The position of the circuits SBB and SHR can be inversed, the row-based circular permutation calculation performed by the circuit SHR being applied to the data in the table PX2<r> before performing the substitute calculation performed by the circuit SBB. At rounds r=0 to R-1, the set PX4<r> is provided to the circuits MXC of the circuits OC2.

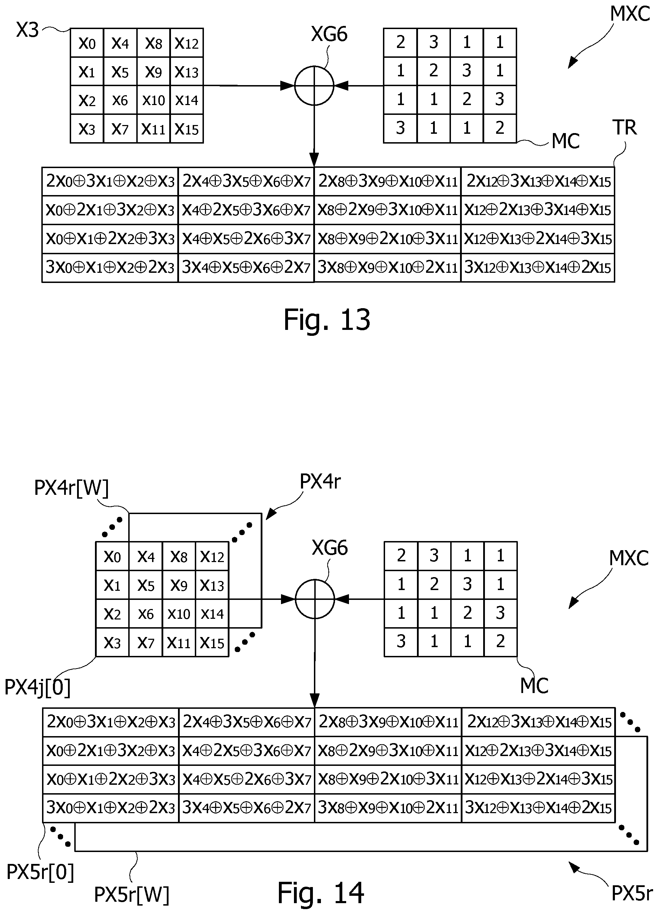

Figure 13 represents the circuit MXC. The circuit MXC combines a data X3 received from the circuit SHR with a coefficient matrix MC of 4x4 elements. To this purpose, the output data X3 is organized into a matrix format of 4x4 elements x0 to x15, each of these elements corresponding to the bytes of the data X6 which is encoded on 128 bits. The elements of the matrix X6 are combined together by XOR operation circuit XG6 with the elements of the matrix MC to produce a resultant matrix TR of 4x4 elements where each element has the following form:

$$a \cdot x<i> \oplus b \cdot x<i+1> \oplus c \cdot x<i+2> \oplus d \cdot x<i+3>, \qquad (16)$$

where a, b, c, d (= 1, 2 or 3) are the elements of one line of the matrix MC and i is equal to 0, 4, 8 and 12. According to AES, the operation 2·x is performed by using the operation LS1(x) if x is lower than 128 (when the most significant bit (MSB) of x equals 0) and the operation LS1(x)⊕0x1B if x is greater or equal to 128 (when the MSB of x equals 1), LS1(x) representing a shift to the left by one bit in the byte x. The operation 3·x is performed using the operation 2·x⊕x.

Since each byte b of the input data X3 is represented by one table PX4<r>[0..W,b], the circuit MXC performs 3x16 XOR operations for each byte in the set PX4<r>[I,0..W4]. One more XOR operations may be necessary to perform the operation 3·x. However in some implementations AES algorithm, the operations 2·x and 3·x are implemented by lookup tables.

As illustrated in Figure 14, the XOR operations for computing an element of the matrix TR as disclosed in Figure 13 is performed within each table PX4<r>[I,0..W4] and these operations provides a table PX5<r>[I,0..W4] for each table PX4<r>[I,O..W4].

Care is to be taken with the order of the operations, when performing the operations of the circuit MXC to keep the masks on the data, since each byte x'<j> is masked by a same mask v (=V[I], x'<j> = x<j>⊕v). The operations of the equation (16) are performed by applying the following property:

$$a(x \oplus v) = ax \oplus av, \text{ with } a = 2 \text{ or } 3. \qquad (17)$$

Thus:

$$A = 2x<0> \oplus 3x<1> \oplus 2v \oplus 3v \oplus x'<2> \oplus x'<3>$$
$$= 2x<0> \oplus 3x<1> \oplus 2v \oplus 2v \oplus v \oplus x'<2> \oplus x'<3>$$
$$= 2x<0> \oplus 3x<1> \oplus v \oplus x<2> \oplus v \oplus x'<3>$$
$$= 2x<0> \oplus 3x<1> \oplus x<2> \oplus x'<3> \qquad (18)$$

Therefore, at this step of the computations, the mask v is removed, which can form a leakage exploitable by a side-channel analysis to determine the data x, even if the mask v reappears when the last XOR operation is performed:

$$A = (2x<0> \oplus 3x<1> \oplus x<2> \oplus x<3>) \oplus v. \qquad (19)$$

In contrast, if the computation of element A is performed in the following order:

$$A = 2x'<0> \oplus x'<2> \oplus x'<3> \oplus 3x'<1>, \qquad (20)$$

we obtain:

$$A = 2x<0> \oplus x<2> \oplus x'<3> \oplus 3x'<1> \oplus 2v \oplus v$$
$$= 2x<0> \oplus x<2> \oplus x<3> \oplus 3x'<1> \oplus 3v \oplus v$$
$$= 2x<0> \oplus x<2> \oplus x<3> \oplus 3x'<1> \oplus 2v \oplus v \oplus v$$
$$= 2x<0> \oplus x<2> \oplus x<3> \oplus 3x<1> \oplus 2v \oplus 3v$$
$$= 2x<0> \oplus x<2> \oplus x<3> \oplus 3x<1> \oplus v. \qquad (21)$$

Therefore, when performing the XOR operations in the order of the coefficients a, b, c, d equal to (2 1 1 3), the result of each XOR operation is always masked. The orders (1 2 1 3), (3 1 1 2) and (1 3 1 2) also maintain the masking after each XOR operation. It can also be observed that the mask v applied to the input data is kept in the output data of the operation performed by the circuit MXC.

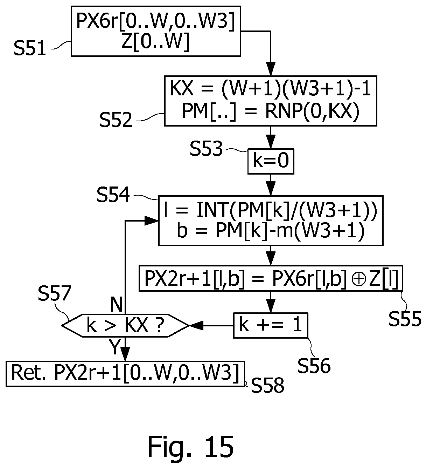

The circuits XG2 of the circuits OC2 combine the set PX5<r> with a round key KT[r]. For this purpose, the circuits XG2 together execute the steps S31 to S37 of Figure 11, using in input the set PX5<r> and the round key KT[r], to provide an output set PX6<r>. The circuit XG5 of each of the circuits OC2 combines the data PX6<r>[I] with the mask parameter Z[I] = U[I] ⊕V[I] by XOR operations. According to one embodiment, the circuits XG5 together execute the steps S51 to S57 of Figure 15, to combine each of the (W4+1) (=16) bytes of each data PX6<r>[I] with a respective mask parameter Z[I] having the size of one byte, for each mask parameter of the mask set Z (I = 0, ... W). Steps S51 to S57 are first successively carried out. At step S51, the mask table Z and the set PX6<r> are input. At step S52, a permutation PM in the form of a table is randomly generated using the function RNP, the permutation PM comprising (W+1)(W4+1) values between 0 and a maximum value KX=(W+1)(W4+1)-1. At step S53, an index k is initialized to zero (0). At step S54, indexes I and b are computed as in step S4. Step S55 computes the output word PX2<r+1>[I,b] at indexes I and b in the output set PX2<r+1> by combining by XOR operations the input word PX6<r>[I,b] at indexes I and b randomly selected in the input set PX6<r> with the mask parameter Z[I] at index I randomly selected in the mask table Z, using the random permutation PM (PX2<r+1>[I,b] = PX6<r>[I,b]⊕Z[I]). At step S56, the index k is incremented by one (1). At step S57, the index k is compared with the maximum value KX. If the index k is greater than the value KX, step S58 is carried out, otherwise steps S54 to S57 are again carried out for a new iteration. At step S58, the output set PX2<r+1> is completely defined and provided as output of steps S51 to S57.

The output set PX2<r+1> provided by the circuits XG5 of the circuits OC2 comprises words PX2<r+1>[I,b] masked with the mask parameters Z[I] = U[I]⊕V[I] (I = 0, .. W). Since the words PX6<r>[I,b] in the output set PX6<r> are already masked with the masks parameters V[I] applied by the circuit SBB, the masks parameters V[I] are removed by the circuits XG5. Thus all the words PX2<r+1>[I,b] in the data set PX2<r+1> are only masked by the mask parameters U[I], and thus the data set PX2<r+1> is ready to be further processed by the circuit SBB at a next round r+1.

At a last round R, a data set PX4<R> is provided by the circuits SHR to the circuits XG3 of the circuits OC2. The circuits XG3 combine each data PX4<R>[I] with a last round key KT[R]. The circuits XG3 together can execute the steps S31 to S37 of Figure 11 using in input the set PX4<R> and the last round key KT[R]. Finally, the circuits XG3 provide an output set PX7<R> comprising words PX7<R>[I,b] = CX1[b]⊕V[I], where CX1 is the expected output data (encrypted data) corresponding to the input data X1, provided by the AES algorithm. More particularly, the output set PX7<R> comprises a data PX7<R>[n] at an index n equal to the expected output data CX1, n being the index of the input data X1 in the input set PX10. According to an embodiment, the circuit XG3 is configured to extract the data CX1 alone.

The decryption algorithm according to AES comprises substantially the same operations as the encryption algorithm. Therefore, the previously described method using pairs of mask sets (U, V) can be applied to protect a program and a circuit implementing the AES decryption algorithm. More particularly, an AES decryption circuit comprises circuits performing XOR operations with round keys, an inverse substitute calculation circuit, an inverse row-based circular permutation calculation circuit, and an inverse column-based permutation calculation circuit. The method illustrated in Figure 11 can be applied to each operation performed by the XOR operations with derived keys. The method illustrated in Figure 12 can be applied to each operation performed by the inverse substitute calculation circuit. The method illustrated in Figure 14 can be applied to the inverse column-based permutation calculation circuit.

It can be noted that the protection method previously disclosed may be applied only to some operations performed in the AES algorithm which would be considered as vulnerable to side channel analysis. For example, the protection method can be applied only to the first and last rounds of the AES algorithm, from which sensitive data could leak.

More generally, the protection method previously disclosed can be applied to other encryption algorithms, implemented by software and/or by hardware, and comprising XOR operations combining sensitive data, such as ARIA (ref. [7]). The ARIA algorithm processes 128-bit data byte per byte and is performed by round, each round comprising a round key addition by a XOR operation, a substitution step using two precomputed substitution tables and their inverses and a diffusion step. The substitution step processes byte per byte the input data combined with the round key, and the diffusion step applies 16 different XOR combinations to the 16 bytes of the data provided by the substitution step. In each of these combinations, seven bytes of the data are added by XOR operations.

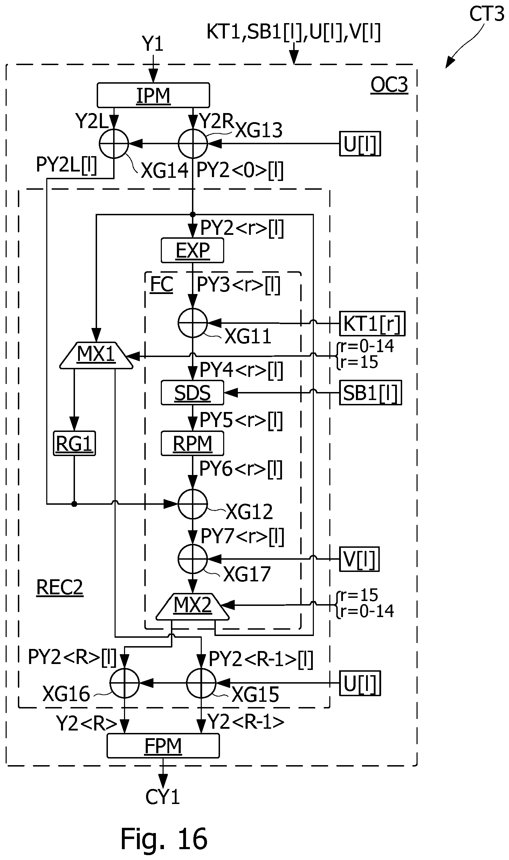

Figure 16 represents an example of a cryptographic calculation circuit CT3 implementing the DES algorithm for encrypting a data. For further details about the DES, the document "Data Encryption Standard (DES) FIPS PUB 46-3" published on 25th October 1999 can be referred to. In Figure 16, the cryptographic calculation circuit CT3 receives a data Y1 to be processed and supplies a resultant data CY1. The circuit CT3 also receives a round key table KT1 containing all round keys derived from a secret key according to the DES algorithm, and DES substitution tables. The circuit CT3 has the architecture of the circuit CT1, and thus comprises W+1 identical circuits OC3, each receiving the input data Y1 and a respective mask parameter U[I] from a mask set U. Each circuit OC3 comprises an initial permutation circuit IPM, a final permutation circuit FPM, and a main encryption circuit REC2 comprising circuits XG11, XG12 performing XOR operations, an expansion circuit EXP, a substitute calculation circuit SDS, a bit permutation circuit RPM, one register RG1 and multiplexers MX1, MX2. The input data Y1 which is encoded on a 64-bit word is applied to the initial permutation circuit IPM. The circuit IPM performs the DES initial permutation operation. The result of the operation performed by the circuit IPM is divided into a left and a right 32-bit word Y2L, Y2R.

The left word Y2L is transmitted to the circuit XG2. The right word Y2R is transmitted to the circuit EXP and the multiplexer MX1 which has one output connected to the register RG1 and one output connected to a right input of the circuit FPM. The register RG1 is connected to one input of the circuit XG2. The circuit EXP performs the DES expansion operation. The circuit EXP receives a 32-bit data and provides a 48-bit data formed of eight 6-bit words to the circuit XG11.

The circuit XG11 combines the 48-bit word in output of the circuit EXP with a first round key KT[0] also encoded on 48 bits, by XOR operations. The result of the operation performed by the circuit XG11 is processed by the substitute calculation circuit SDS which provides a 32-bit word using the eight DES substitution tables. Each 6-bit word in input of the circuit SDS is used as an index to select a 4-bit word in a respective one of the eight DES substitution tables. Thus, the circuit SDS provides eight 4-bit words, forming a 32-bit data which are processed by the circuit RPM performing the DES round bit permutation operation. The 32-bit data provided by the circuit RPM is combined with the 32-bit data in the register RG1, by the circuit XG12 applying XOR operations. The result provided by the circuit XG12 is transmitted to the multiplexer MX2 having one output connected to the circuit EXP and the multiplexer MX1, and one output connected to a left input of the circuit FPM. The circuit FPM performs the DES final permutation operation and provides a 64-bit word CX1.

At a first calculation round according to the DES algorithm, a right 32-bit word Y2R (R0) in output of the circuit IPM is stored in the register RG1 and processed by the circuit EXP, and then successively by the circuit XG11, SDS and RPM, and provided to the circuit XG12. The left 32-bit word Y2L (L0) in output of the circuit IPM is transmitted to the circuit XG12. The right word Y2R (R0) is transferred by the multiplexer MX1 to the register RG1. The word (R1) in output of the circuit XG12 is transmitted by the multiplexer MX2 to the circuit EXP for a new calculation round, and to the multiplexer MX1 for a next round. At a second and all the next calculation rounds, the 32-bit word computed by the circuit XG12 is processed by the circuits EXP, XG1, SDS, RPM and XG12, the circuit XG12 receiving the word stored in the register RG1.

At a 16th and last round, a word (R14) in the register RG1 is combined with an output of the circuit RPM by the circuit XG12 which provides a word (R16) to the multiplexer MX2 which transmits it as a most significant word to the left input of the final permutation circuit FPM. At the same time, the word (R15=L16) computed by the circuit XG12 is provided by the multiplexer MX1 as a least significant word to the right input of the circuit FPM which outputs the output data CY1.

According to an embodiment, each of the circuits OC3 receives a respective a mask parameter U[I] from a mask set U, a mask parameter V[I] from a mask set V and masked substitution tables SB1[I]. Each of the circuits OC3 comprises circuits XG13, XG14, XG15, XG16 performing XOR operations with the mask parameter U[I], and a circuit XG17 performing XOR operations with the mask parameter V[I]. The circuits XG13, XG14 are interposed between the circuit IPM, and respectively, the circuits EXP and XG12. The circuits XG15, XG16 are interposed between the multiplexers MX1, MX2, respectively, and the circuit FPM. The circuit XG17 is interposed between the circuit XG12 and the multiplexer MX2. The circuits XG13 and XG14 provide 32-bit word input sets PY2<0> (= PY2R) and PY2L from the data Y2L, Y2R provided by the circuit IPM. The circuit EXP provides a 48-bit word output set PY3<r> from the output set PY2<r>, r being the DES round number, from 0 to R. The circuit XG1 provides a 48-bit word output set PY4<r> from the output set PY3<r>. The circuit SDS provides a 32-bit word output set PY5<r> from the output set PY4<r>. The circuit RPM provides a 32-bit word output set PY6<r> from the output set PY5<r>. The circuit XG12 provides a 32-bit word output set PY7<r> from the output set PY6<r>. Finally, the circuit XG17 provides the 32-bit word output set PY2<r+1> from the output set PY7<r>. The circuit XG15 removes the mask parameter U[I] from the data PY2[I]<R-1>, and the circuit XG16 removes the mask parameter U[I] from the data PY2[I]<R>.

According to an embodiment, the mask set U in input of the circuit CT3 comprises W+1 32-bit words, each being obtained by concatenating four bytes U1[I], U2[I], U3[I], U4[I] (U[I] = U1[I]//U2[I]//U3[I]//U4[I], for each integer number I between 0 and W=255), U1, U2, U3, U4 being four permutations of W+1 bytes, such that:

$$U2 = F1(U1),$$
$$U3 = F2(U1), \text{ and}$$
$$U4 = F3(U1), \qquad\qquad (22)$$

F1, F2, F3 being functions, such that each of the 48-bit words EXP(U[I]) provided by the circuit EXP applied to each of the 32-bit words U[I] (I = 0 to W), comprises eight six-bits words, each comprising only once bits of the 8-bit word U1[I]. In other words, the transformed set EXP(U) obtained by applying the expansion function EXP to the mask set U has the form of a table of (W+1)(W3+1) 6-bit words, each column of (W+1) 6-bit words comprising four (4) occurrences of each possible value (0 to 63) of a 6-bit word.

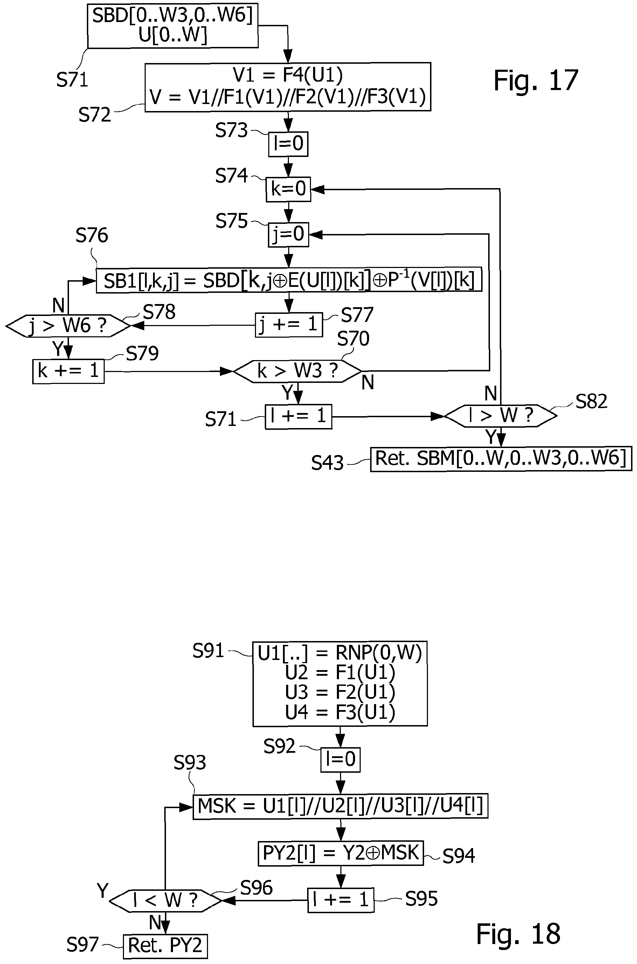

The masked substitution tables SB1 are generated by executing the procedure of Figure 18, for example. The procedure of Figure 17 comprises steps S71 to S73. Steps S71 to S78 are first successively carried out. At step S71, the procedure receives the DES substitution tables SBD and the mask set U. The substitution tables SBD comprise W3+1 (= 8) substitution tables SBD[0..W3, 0..W6] each comprising W6+1 (=64) 4-bit words. At step S72, a mask set V is computed. At step S73, an index I is initialized to zero (0). At step S74, an index k is initialized to zero (0). At step S75, an index j is initialized to zero (0). At step S76, one element of the masked substitution table SB1 is computed using the following equation:

$$SB1[l,k,j] = SBD[k,j \oplus E(U[l][k]) \oplus P^{-1}(V[l])[k] \qquad\qquad (23)$$

where SBD[k] represents the DES substitution table of rank k (with k = 0 to W3=7), each table SBD[k] comprising 64 4-bit words which can be selected using 6-bit indexes, E(U[I]) represent a 48-bit word resulting from the DES expansion operation performed by the circuit EXP, applied to the mask parameter U[I], E(U[I])[k] represents a 6-bit word of index k in the 48-bit word E(U[I]), $P^{-1}(V[I])$ represents a 32-bit word resulting from an inverse $P^{-1}$ of the DES round permutation operation performed by the circuit RNP applied to the mask parameter V[I], and $P^{-1}(V[I])[k]$ represents a byte of index k in the 32-bit word $P^{-1}(V[I])$. At step S77, the index j is incremented by one (1). At step S78, the index j is compared with a maximum value W6 which is equal to $2^6$-1 (=63). If the index j is greater than the value W6, steps S79 and S80 are executed, otherwise steps S75 to S78 are executed again for a new iteration. At step S79, the index k is incremented by one (1). At step S80, the index k is compared with a maximum value W3 (=$2^3$-1=7). If the index k is greater than the value W3, steps S81 and S82 are executed, otherwise steps S75 to S80 are again executed for a new iteration. At step S81, the index I is compared with the maximum value W which is equal to $2^8$-1 (=255). If the index I is greater than the value W, step S83 is executed, otherwise steps S74 to S82 are again executed for a new iteration. At step S83, the masked substitution tables SB1[0..W,0..W3,0..W6] are provided as a result of steps S71 to S82.

The mask set V comprises W+1 32-bit mask parameters each being formed of four bytes V1[I], V2[I], V3[I], V4[I], (I=0 to W), V1, V2, V3, V4 being permutations of W+1 bytes (comprising a single occurrence of each possible value of one byte).

According to one embodiment, the permutation V1 is generated by applying a function F4 to the permutation U1. The function F4 is selected such that the permutation Z1 formed of the bytes U1[I]⊕F4(U1[I]) with I = 0 to W, also comprises W+1 bytes and a single occurrence of each possible value of one byte. The function F4 is further selected such that the set $P^{-1}(V[I])$ resulting from the application of an inverse $P^{-1}$ of the DES round permutation operation performed by the circuit RNP applied to the mask parameters V[I] of the set V, comprises a single occurrence of each possible value of one byte. The permutation V1 can be defined from the permutation U1, using the equations (12) or (13), considering that V0 = F4(U0). Then the permutations V2, V3 and V4 are computed using the functions F1, F2, F3 used to compute the permutations U2, U3, U4. Thus:

$$V2 = F1(V1),$$
$$V3 = F2(V1), \text{ and}$$
$$V4 = F3(V1). \qquad\qquad (24)$$

The permutation U1 and the functions F1, F2, F3 are further selected such that each of the 32-bit words $P^{-1}(V[I])$ applied to each of the 32-bit words V[I] (I = 0 to W), comprises eight 4-bits words, each comprising only once bits of the 8-bit word V1[I]. In other words, the transformed set $P^{-1}(V)$ has the form of a table of (W+1)(W3+1) of 4-bit words, each column of (W+1) 4-bit words comprising sixteen (16) occurrences of each possible value (0 to 15) of a 4-bit word.

According to an embodiment, the circuits XG13, XG14 of all circuits OC3 process the data Y2L, Y2R received from the circuit IPM to provide two data sets PY2L, PY2R (=PY2<0>) by executing steps S61 to S67 of Figure 17. The steps S61 to S66 are first executed successively. At step S61, a random permutation U1 is generated, the permutation U1 comprising all the W+1 (=256) byte values (between 0 and 255) in a random order. Permutations U2, U3 and U4 are further generated by respectively applying functions F1, F2, F3 to the permutation U1. At step S63, the mask value MSK is generated by concatenating the bit strings formed by the mask parameters U1[I], U2[I], U3[I] and U4[I], where Ui[I] is a byte of index I in the permutation Ui, and i = 1, 2, 3 and 4. Thus, at step S64, each of the 32-bit right and left words Y2R, Y2L is combined with a 32-bit word formed as follows:

$$PY2[I] = Y2 \oplus U1[I]//U2[I]//U3[I]//U4[I]. \qquad (25)$$

with Y2 = Y2R (or Y2L) and PY2 = PY2R (resp. PY2L).

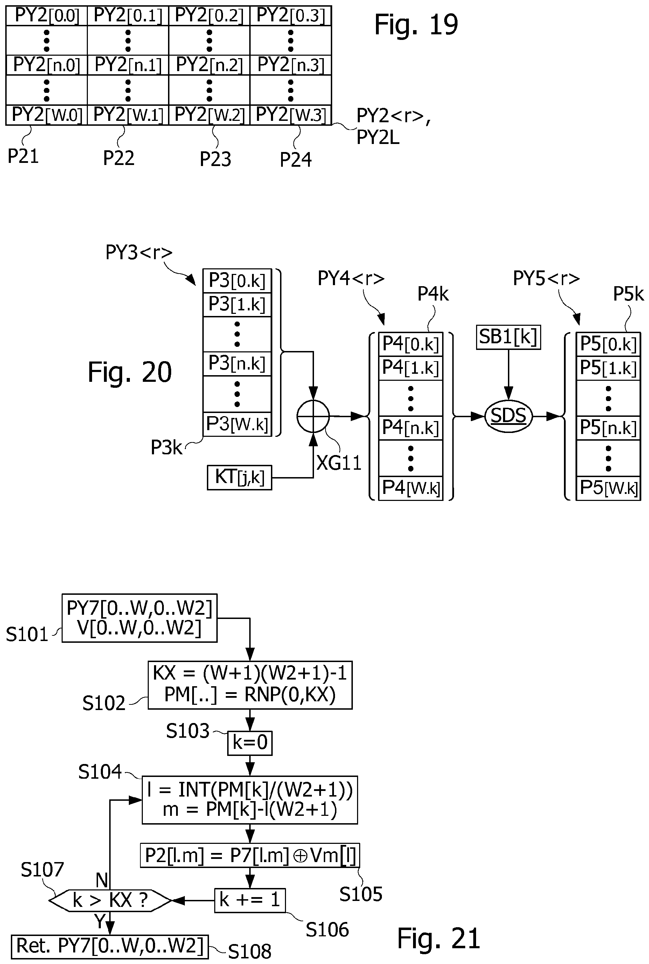

As shown in Figure 19, each output set PY2R, PY2L comprises W+1 32-bit words PY2[I], or four columns P21, P22, P23, P24 of W+1 bytes, each column comprising a single occurrence of each possible value of one byte, and in particular, one occurrence of the output datum Y2R, Y2L at a row n, n being such that U1[n] = 0. Since the mask word sets U2, U3 and U4 are derived from mask word set U1 by applying functions (F1, F2, F3), U2[n] = U3[n] = U4[n] = 0.

As shown in Figure 20, the output set PY3<r> (r=0 to R) provided by the circuits EXP of all circuits OC3 comprises eight (8) columns P3k (k = 0 to 7) of W+1 6-bit words P3[I.k] (I = 0 to W). Thanks to the above-definition of the mask table U, each column P3k of the output set PY3<r> comprises four (4) occurrences of each possible value encoded on six bits (4 x 64 = 256). Thus the use of the mask table U as above-defined enables the protection of an expansive bit permutation operation such as the one performed by the circuit EXP.

According to an embodiment, a circuit FC comprising the circuits XG11, SDS, RPM, XG12 and XG17 in all the circuits OC3 successively processes each column P3k, one after the other, as illustrated in Figure 20. The circuits XG11 of all circuits OC3 combines each 6-bit word P3[I.k] (I = 0 to W=255) of the column P3k with a respective part KT[r,k], of 6 bits of the 48-bit round key KT[r], and provides a column P4k of the output set PY4<0> of W+1 6-bit words P4[I.k], comprising four (4) occurrences of each possible value encoded on six (6) bits (4 x $2^6$ = 256).

Thus, the substitution operation performed by the circuits SDS of all circuits OC3 uses a different masked substitution table SB1[I,k] for each word P4[I,k], for all values of I between 0 and W, and for all values of k between 0 and W3. Each 6-bit word P4[I.k] in the output column P4k is used as an index to select a 4-bit word P5[I.k] in the DES substitution table SB1[I.k]. The circuits SDS of all circuits OC3 provides a column P5k of the output set PY5<0> comprising W+1 4-bit words P5[k.I] (I = 0 to W), and sixteen (16) occurrences of each possible value encoded on four bits (16 x $2^4$ = 256).

Thanks to the use of the above-defined mask tables U and V, the output set PY5<r> in output of the circuit SDS comprises W3+1 (=8) columns P5k of 16 occurrences of each of the 16 possible 4-bit word values. The permutation operation performed by the circuit RPM provides an output set PY6 comprising 4(W+1) bytes. Thanks to the use of the above-defined mask table V, each column of byte in the output set PY6 also comprises one occurrence of each of the 256 possible byte values. It can be observed that the above-definition of the mask tables U and V enables the protection of a bit permutation operation either expansive such as the operation performed by the circuit EXP, or not expansive as the operation performed by the circuit RPM.

Then, the circuit XG12 combines the output set PY6<r> with the output set PY2<r-1>, according to the method illustrated in Figure 6. The circuits XG12 of the circuits OC3 apply XOR operations to each byte PY6<r>[I,k] of the set PY6<r>, and to byte PY2<r-1>[I,k] of the set PY2<r-1> in the register RG1, for each column k of the output sets PY6<r> and PY2<r-1>. The result of the XOR operations forms for each column k a data set PY7 comprising (W+1) bytes computed as follows:

$$PY7<r>[I,k] = PY6<r>[I,k] \oplus PY2<r-1>[I,k], \qquad (26)$$

with PX2<r-1>[I,k] representing the byte of row I and the column P2k of the set PY2L at round r = 0, and of the set PY2<r-1> at other rounds r = 1 to R.

Thanks to the definition of the function F4 to define the mask parameter bytes V1[I] from the mask parameter bytes U1[I], and the use of the functions F1, F2, F3 to define the other bytes U2[I], U3[I], U4[I], V2[I], V3[I], V4[I], each byte column PY7<r>[0..W,k] of the output table PY2<r+1> comprises W+1 bytes and one occurrence of all possible values of one byte. In addition, the expected output byte remains at the same row n of the input data X1 in the input set PX1, n being such that Ui[n]=0, with i = l, 2, 3 and 4. As a result, each 32-bit data of the output set PY7<r> provided by the circuit XG12 is masked by the mask combination U[l]⊕V[l], the mask parameters U[l] coming from the words of the output set PY2<r-1> and the mask parameters V[l] coming from the words of the output set PY6<r>.

The circuits XG17 of all the circuits OC3 remove the masks V[l] from the output set PY7<r> to provide the output set PY2<r+1> by performing XOR operations applied to bytes. An example of the procedure performed by the circuit XG17 of all the circuits OC3, is illustrated in Figure 21. In this example, all XOR operations are performed in a random order. The procedure of Figure 21 comprises steps S101 to S108. Steps S101 to S107 are first successively carried out. At step S101, the mask table V and the output set PY7 are input. The output set PY7 comprises bytes P7[0,0], ... P7[W,W2] (W2 = $2^2$-1 = 3) and the mask table V which comprises W 32-bit masks parameters V[0], ... V[W], is considered as a table of (W+1)(W2+1) bytes. At step S102, a permutation PM in the form of a table is randomly generated using the function RNP, the permutation PM comprising (W+1)(W2+1) values between 0 and a maximum value KX=(W+1)(W2+1)-1, where W+1 is the number (=256) of 32-bit words in the tables PY7 and V (W is also the greatest value in these tables). At step S103, an index k is initialized to zero (0). At step S104, indexes I and m are computed from the index k by considering that the permutation PM is a two-entry table comprising rows of W2+1 bytes and columns of W+1 bytes. Thus the index I can be computed as being the integer part INT() of the division of the value PM[k] by (W2+1), and the index m can be computed as being the difference between the value PM[k] and the product of the index I by (W2+1). Step S105 computes the output word P2[I.m] at indexes I and m in the output set PY2 by combining by XOR operations the input word P7[I.m] at indexes I and m randomly selected in the input set PY7 with the mask parameter V[I] at index I randomly selected in the mask table V, using the random permutation PM:

$$(P2[I.m] = P7[I.m] \oplus Vm[I]). \hspace{3cm} (27)$$

where Vm[I] represents the byte m in the mask parameter V[I]. At step S106, the index k is incremented by one (1). At step S107, the index k is compared with the maximum value KX. If the index k is greater than the value KX, step S108 is carried out, otherwise steps S104 to S107 are again carried out for a new iteration. At step S108, the output set PY2 is completely defined and provided as output of steps S101 to S107.

It can be observed that such a permutation PM can be also used by the other circuits of the circuits OC3, such as XG1, XG2, RPM to process and/or store the different words in the processed data sets in a random order. The generation and use of the permutation PM can be omitted if the data in the table PY2 may be computed and/or stored in a deterministic order. In addition, the large and costly permutation PM can be replaced by two permutations of W+1 elements and W3+1 elements, respectively, the elements of which are read within two nested loops, one for selecting an element of a first one of the two permutations and, one for selection an element of the other one of the two permutations.

At the end of the last round R, the mask parameters U[I] are removed from the output sets PY2<R-1> and PY2<R>, respectively by the circuits XG15, XG16 of each circuit OC3. Thus the circuits XG15, XG16 of each circuit OC3 provide the same data Y2<R-1> and Y2<R>, respectively. The circuit FPM receives the two data Y2<R> and Y2<R-1>, and provides the 64-bit output data CY1. It can be observed that the mask parameters U[i] are kept throughout the operations performed by the circuits EXP and FC, thanks to the choice of the extracted column in the output set PR2. In addition, a fault injection can be detected when one of the circuits XG15, XG16 provides an output data different from the other output data Y2<R> and Y2<R-1>.

The permutations U1, U2, U3, U4 can be generated such that the 48-bit word provided by the circuit EXP applied to each of the words U1[I]//U2[I]//U3[I]//U4[I] (I = 0 to W) comprises eight six-bit words, each comprising only once bits of the words U1[I], U2[I], U3[I], U4[I]. When this condition is met, each 6-bit word column of the set provided by the circuit EXP applied to each of the words U1[I]//U2[I]//U3[I]//U4[I] comprises four (4) occurrences of each possible value encoded on six bits. For example, let us choose U1[I] = U2[I] = U3[I] = U4[I] = b0//b1//b2//b3//b4//b5//b6//b7. The circuit EXP receiving the 32-bit word U1[I]//U2[I]//U3[I]//U4[I] provides the following 6-bit words:

   b0//b7//b6//b3//b4//b4 which contains twice the bit b4,
   b4//b4//b3//b3//b0//b0 which contains twice the bits b0, b3 and b4,
   b0//b0//b6//b6//b1//b4 which contains twice the bits b0 and b6,
   b1//b4//b1//b6//b1//b1 which contains four times the bit b1,
   b1//b1//b7//b7//b5//b7 which contains twice the bit b1 and three times the bit b7,
   b5//b7//b2//b2//b0//b2 which contains three times the bit b2,
   b0//b2//b4//b5//b5//b5 which contains three times the bit b5,
   b5//b5//b2//b3//b0//b7 which contains twice the bit b5.

Therefore, the condition that each output mask word OMi' comprises only bits of different numbers is not fulfilled.

The above-condition on the result provided by the circuit EXP can be expressed by an equation system, the resolution of which provides a great number of solutions (about $2^{22}$ solutions). The solutions can be expressed in the form of values of three first permutations, for example U2, U3, U4, as a function of a last permutation, U1. Some of these solutions are in the following:

```
U2 = b0//b2//b1//b3//b4//b5//b6//b7
U3 = b1//b0//b3//b2//b5//b6//b7//b4
U4 = b0//b3//b1//b2//b4//b7//b5//b6
```

```
U2 = b1//b3//b0//b6//b4//b5//b2//b7
U3 = b5//b7//b3//b0//b4//b6//b1//b2
U4 = b2//b6//b0//b3//b1//b7//b5//b4
```

```
U2 = b0//b2//b1//b4//b3//b6//b5//b7
U3 = b3//b0//b7//b1//b2//b4//b6//b5
U4 = b0//b7//b4//b1//b5//b2//b6//b3
```

with U1 = b0//b1//b2//b3//b4//b5//b6//b7. Each of these solutions defines the functions F1, F2, F3 used in step S61. If the circuit EXP receives the 32-bit word U1[i]//U2[i]//U3[i]//U4[i] as defined in the first solution, it provides the following 6-bit words:

```
b0//b7//b6//b2//b5//b4,
b5//b4//b3//b2//b1//b0,
b1//b0//b6//b7//b3//b4,
b3//b4//b0//b5//b2//b1,
b2//b1//b7//b4//b5//b6,
b5//b6//b1//b2//b0//b3,
b0//b3//b4//b7//b5//b6,
b5//b6//b1//b3//b0//b7.
```

It can be observed that none of the 6-bit words above contains twice (or more) the same bit of the permutation U1.
The mask set V can be generated so that the 32-bit word provided by the inverse $P^{-1}$ of the operation performed by the circuit RNP applied to each of the words V1[I]//V2[I]//V3[I]//V4[I] (I = 0 to W) comprises four bytes, each comprising only once bits of the words V1[I], V2[I], V3[I], V4[I]. When this condition is met, each byte column of the set provided by the circuit RNP applied to each of the words V1[I]//V2[I]//V3[I]//V4[I] comprises one occurrence of each possible byte value. When the mask parameter bytes V1-V4 are determined from the mask parameters U1-U4 using the function F4, the condition applied to the mask parameters V1-V4 resulting from the inverse bit permutation operation $P^{-1}$, can be used in combination with the condition resulting from the operation EXP to determine the functions F1, F2 and F3, such that both the mask sets U and V satisfy both the conditions resulting from the permutations EXP and $P^{-1}$.
It can be observed that the mask set U can be defined to keep its property that each word column Ui comprises the same number of occurrences of all possible values of a word after being processed by the circuit FPM. In addition, when another execution of the DES encryption algorithm is required for executing the triple DES algorithm or a chained encryption or decryption, the circuits XG15 and XG16 output data PY2<R>[n] and PY2<R-1>[n] are extracted and processed by the circuit FPM only when an encryption data is to be provided by the circuit, i.e. at the end of the third execution of the DES algorithm.
More generally, when considering the application of an operation OPR to a protected data X in the form of an input set PX, which can be obtained using the procedure of Figure 3, and as illustrated in Figure 4, the data X having the size of one or several words. Thus the data X is represented by an input set PX comprising data PX[0], PX[2], ... PX[W], each of these data having the same size as the input data X. The required input data X is at index n in the input set PX: X = PX[n], n being an integer number between 0 and W. The result of the operation is an output set PR comprising W+1 output data PR[0], PR[1], ... PR[W], wherein each data PR[I] equals OPR(PX[I]). The expected output data OPR(X) is equal to the output data PR[n] located at the same index n in the output set PR. Each data in the output set PR can be expressed as follows:

$$PR[I] = OPR(PX[I]) = OPR(X \oplus IM[I]) = OPR(X) \oplus OM[I], \qquad (28)$$

for each index I between 0 and W, in which IM is an input mask set, OM is an output mask set of several words such that OM[I] = OPR(IM[I]) for each index I between 0 and W, each mask set IM, OM comprising W+1 mask parameters IM[I], OM[I],

It turns out that such a protection is efficient when each word column of the output set PR comprises the same number of occurrences of all possible values of one word, in relation to the size of one word thereof. For this purpose, each of the mask sets IM and OM should comprise mask parameters, each comprising at least one word arranged in a word column in the mask set and comprising one word from each mask parameter of the mask set, the words in one word column of the mask sets IM and OM having the same size and comprising the same number of occurrences of all possible values of the words in relation with the word size. It further turns out that if the input mask set has this property, the bit permutation operations, expansive or not, do not generally transmit this property to the output mask set.

According to an embodiment, this property can be transmitted to the output mask set by choosing particular input mask parameters IM[I]. Such input mask parameters can be determined by the following method.

The output mask set OM is defined such that:

$$OM[I] = OPR(IM[I]), \qquad\qquad (29)$$

for each index I between 0 and W. Each mask parameter IM[I] is formed of m words IMi[I] of k bits (i = 1 to m):

$$IM[I] = IM1[I]//IM2[I]//\ldots//IMm[I]$$

with IMi = ib[i,x1]//ib[i,x2]//.../ib[i,xk], ib[i,xj] representing a bit number xj of the word IMi, and xj ≠ xj' for each possible distinct values of j and j', and each index value i between 1 and m, IMi generically representing any value IMi[I]. Each mask parameter OM[I] is formed of m' words OMj of k' bits (i = 1 to m'):

$$OM[I] = OM1[I]//OM2[I]//\ldots//OMm'[I]$$

with OMi = ob[i,x1]//ob[i,x2]//.../ob[i,xk'], ob[i,xj] representing a bit number xj of the word OMi, and xj ≠ xj' for each possible distinct values of j and j', and each index value i between 1 and m', OMi generically representing any value OMi[I].

The equation (29) can be translated into a set of equations between the bits of the mask parameters words IMi and OMi' using the definition of the bit permutation operation. Solutions in the form of equalities between each of the bits of the words OMi' and one the bits of the words IMi, verifying the above rules between the bits of the words IMi, OMi', can be determined by testing hypotheses. This method can be used to define the above described mask sets U and V or the parts U1 and V1 of these mask sets.

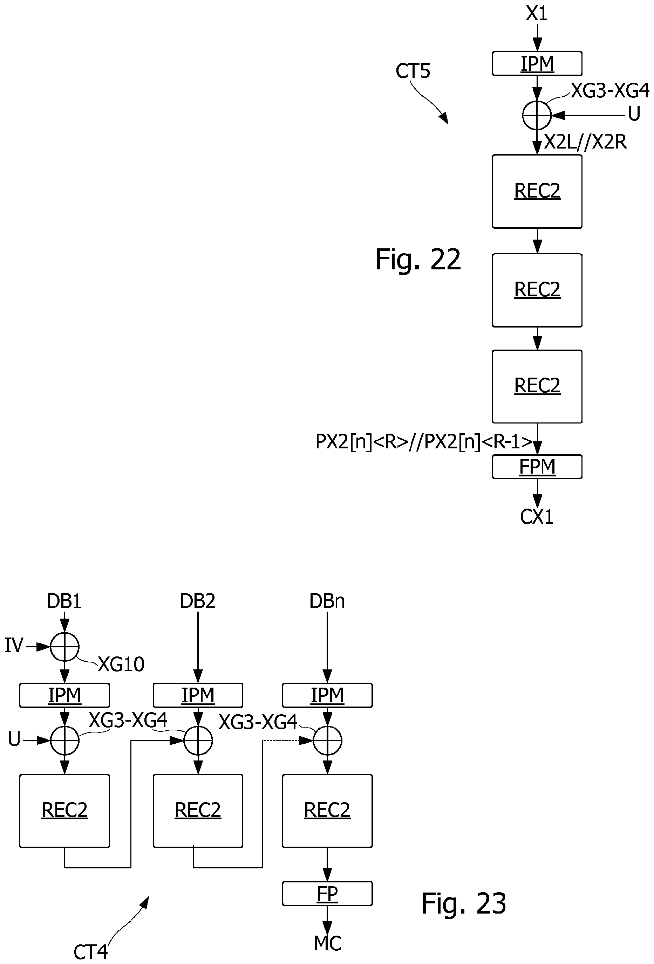

Figure 22 represents a circuit CT5 implementing the Triple DES algorithm, protected according to an embodiment. The circuit CT5 comprises in series the circuit IPM performing the DES initial permutation, several main encryption circuits REC2, a circuit FPM performing the DES final permutation, and the circuits XG3 and XG4 inserted between the circuit IPM and a first of the circuits REC2. The circuit IPM receives the input data X1. The circuits XG3, XG4 introduce the mask set U in the processing by generating the input data sets X2L, X2R. The last circuit REC2 provides a final output data PX2[I]<R>// PX2[I]<R-1> to the circuit FP which provides the output encrypted data CX1. Between two circuits REC2, one of the two circuits REC2 provides an intermediary output set PX2<R>// PX2<R-1> of 64-bit data PX2[I]<R>// PX2[I]<R-1> which is processed first by the expansion circuit EXP of the next circuit REC2, without having to remove the masks of the intermediary output set or extract the output data. Thus the whole process is protected from the circuits XG3, XG4 to the circuit FPM.

Figure 23 represents a circuit CT4 implementing a block cipher-based message authentication code algorithm such as CMAC (Cipher-based Message Authentication Code) based on the DES algorithm. The circuit CT4 comprises several stages each comprising the circuit IPM implementing the DES initial permutation, the circuits XG4, XG5, and the main encryption circuit REC2 represented in Figure 17.

A first stage comprises a circuit XG10 performing XOR operations combining a 64-bit initial value IV with a first input data bloc DB1 of 64 bits. A final stage comprises the circuit FPM receiving the data provided by the circuit REC of the final stage, and providing an output data MC. Both the circuits XG3, XG4 of the first stage receive the mask set U. The output data provided by the circuit REC of the first stage is provided to an input of the circuits XG3, XG4 of a next stage, the circuit XG3 receive the right part of the output data and the circuit XG4 receiving the left part of the output data. The circuit IPM of the next stage receives another data block DB2, ...DBn. The final stage comprises circuit FPM receiving a 64-bit output data from the circuit REC2 of the final stage, and providing an output data MC.

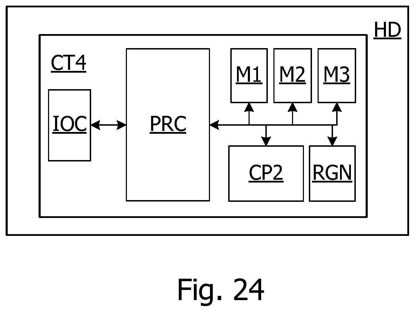

Figure 24 represents an integrated circuit CT6 arranged on a portable medium HD such as a plastic card, and implementing one of the protection methods previously described, according to one embodiment. The integrated circuit comprises the same units as the integrated circuit CT described above in connection with Figure 1, and differs from the latter in that the coprocessor CP1 is replaced with a coprocessor CP2 implementing one and/or the other protection methods described above, for example in the form of the circuit CT1, CT2, CT3, CT4 or CT5. Therefore, according to one embodiment, the coprocessor CP2 is configured to provide output tables of resulting data, rather than a single data of a cryptographic operation, each output table including the expected result of the cryptographic operation, the output table being such that all data in the output table have a same number of occurrences. The processor PRC can be configured to have access to the mask table V. Thus the processor PRC can deduce the output data from the output set by combining any one of the data in the output set by one mask parameter in the mask table V or U, the selected data having a same rank in the output set as the mask parameter selected in the mask table V or U.

The coprocessor CP2 may also be configured to execute a part of the cryptographic operation. In this case, the processor PRC is configured to produce output tables of resulting data including the result of the cryptographic operation, each output table being such that all data in it have the a same number of occurrences.

The methods disclosed herein may also be implemented by software programs executable by a computer system. Further, implementations may include distributed processing and parallel processing, especially for processing in parallel several or all data in the input data sets and/or for providing in parallel several or all data in the output data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive. Thus, the scope of the following claims is to be determined by the broadest permissible interpretation of the claims, and shall not be restricted or limited by the foregoing description.

The previous examples illustrated in Figures 4 to 6, can be applied to other operations than XOR, provided that these operations are performed bitwise and are reversible or bijective.

References cited

[1] P. C. Kocher, "Timing attacks on implementations of Diffie-Hellman, RSA, DSS, and other systems" In Neal Koblitz, editor, Advances in Cryptology - CRYPTO '96, volume 1109 of Lecture Notes in Computer Science, p. 104-113. Springer, 1996.

[2] P. C. Kocher, J. Jaffe, and B. Jun, "Differential Power Analysis" In M. J. Wiener, editor, Advances in Cryptology - CRYPTO '99, volume 1666 of Lecture Notes in Computer Science, p. 388-397. Springer, 1999.

[3] E. Brier, C. Clavier, and F. Olivier, "Correlation Power Analysis with a Leakage Model" In M. Joye and J-J. Quisquater, editors, Cryptographic Hardware and Embedded Systems - CHES 2004, volume 3156 of Lecture Notes in Computer Science, p. 16-29. Springer, 2004.

[4] J.-J. Quisquater, "ElectroMagnetic Analysis (EMA): Measures and Counter-measures for Smart Cards", Smart Card Programming and Security, Springer Berlin / Heidelberg, vol. 2140, 2001, p. 200-210

[5] S. Chari, J. R. Rao, and P. Rohatgi, "Template Attacks", Kaliski Jr., B.S., Koç, Ç.K., Paar, C. (eds.) CHES 2002. LNCS, vol. 2523, p. 172-186. Springer, Heidelberg (2003)

[6] B. Gierlichs, L. Batina, P. Tuyls, and B. Preneel, "Mutual Information Analysis", CHES 2008, volume 5154 of LNCS, p. 426-442, Springer, 2008

[7] Daesung Kwon et al., "New Block Cipher: ARIA", Information Security and Cryptology - ICISC 2003, Volume 2971 of the series Lecture Notes in Computer Science p. 432-445

**Claims**

1. A method for executing by a circuit (CT1, CT2, CT3) a requested operation (OPR, XG5, XG12) whereby a first input data (X1) is combined with a second input data (X2), the method comprising:

   computing a first input set (PX1) comprising the first input data, by applying Exclusive OR (XOR) operations ($\oplus$) to the first input data and to all first mask parameters (U[I]) in a first mask set (U),
   **characterized in that** it comprises:

   generating a second mask set (V) comprising second mask parameters (V[I]), each first mask parameter (U[I]) in the first mask set (U) forming a respective mask pair (U[I], V[I]) with a corresponding second mask parameter in the second mask set, the mask pairs being such that combinations by XOR operations of the first mask parameter with the second mask parameter in each mask pair produce a third mask set comprising third mask parameters, the mask parameters in each of the first, second and third mask sets being such that each mask parameter in the mask set comprises at least one first word, the first words in the mask set having a same size and forming a word subset comprising a single word from each mask parameter in the mask set and a same number of occurrences of all possible values of a word having the size of the first words;
   computing a second input set (PX2) comprising the second input data, by applying XOR operations to the second input data and to all second mask parameters in the second mask set, each data in the first input set being associated with a respective data in the second input set in a respective input pair, such that the mask parameters from which each data in each input pair is computed are associated by one of the mask pairs;
   applying the requested operation to each input pair to compute output data (PR1[..], PX2<r>[I], PY7<r>[I]); and
   providing an output set (PR1, PX2<r>, PY7<r>) of the requested operation comprising all the computed output data.

2. The method of claim 1, wherein the requested operation is an Exclusive OR.

3. The method of one of claims 1 to 2, wherein the first and second mask sets (U1, V1) are generated from a first pair (U0, V0) of first and second permutations of words, each comprising a same number of occurrences of all possible values of the words, such that the combination by XOR operations of each word in the first permutation with a respective word of the second permutation provide a resultant permutation comprising words, and the same number of occurrences of all possible values of the words, the first and second mask sets being generated using the following equations:

$$U1[I] = PM(u1[I] \oplus UR),$$

and

$$V1[I] = PM(v1[I] \oplus VR),$$

or

$$U1[I] = PM(u1[I]) \oplus UR,$$

and

$$V1[I] = PM(v1[I]) \oplus VR,$$

for each index I, where UR and VR are random words of the size of any of the masks parameters U1[I] or V1[I], u1 and v1 are previously computed sets obtained by the equations, or equal to the mask sets of the first pair respectively, and PM is a randomly selected permutation applied to the sets u1 and v1.

4. The method of one of claims 1 to 3, wherein each second input data in the second input set is selected in a respective masked substitution table by a substitution operation, the masked substitution tables (SBM, SB1) being generated from an input substitution table (SBX, SBD) and comprising one masked substitution table (SBM[I]) for each of the first mask parameters (U[I]) in the first mask set (U) and the corresponding second mask parameter (V[I]) in the second mask set (V).

5. The method of claim 4, wherein the masked substitution tables are generated by:

generating the first mask set (U);
generating the second mask set (V) comprising a number of second mask parameters equal to the number of values in the input substitution table (SBX, SBD);
selecting once each mask parameter in the first and second mask sets to form mask pairs, each comprising one of the first mask parameters and one of the second mask parameters;
generating for each mask parameter in the first mask set one of the masked substitution table (SBM[I], SB1[I]), the generation of each of the masked substitution tables comprising:
selecting each data in the input substitution table, and for each selected data (SB[i], SB[i⊕U[I]]):

computing a masked data (SB[i]⊕V[I], SB[i⊕U[I]]⊕V[I]) by applying XOR operations to the selected data and to the second mask parameter (V[I]) corresponding to the first mask parameter or to a transformed value (P(V)) thereof;
computing a masked index (i⊕U[m]) by applying XOR operations to an original index (i) and to the first mask parameter (U[I]) or a transformed value thereof (E (U)); and
storing the masked data in the masked substitution table, the selected data being selected at the original index and the masked data being stored at the masked index, or the selected data being selected at the masked index and the masked data being stored at the original index.

6. The method of one of claims 1 to 5, wherein the computations of the data in the output set (PCX, PX2<r>, PY7<r>) are performed in a random order.

7. The method of one of claims 1 to 6, wherein each output data in the output set (PCX, PX2<r>, PY7<r>) comprises at least one word, the words in the output set having a same size and forming a an output word subset comprising a single word from each output data in the output set and a same number of occurrences of all possible values of the words, the method comprising:

detecting in the output word subset a word having a number of occurrences different from the number of occurrences of other words in the output word subset, an error being detected when two words with different numbers of occurrences are found the word output subset, or
combining by XOR operations each data in the output set with a respective mask parameter of a resultant mask set such the output set comprises data resulting from applying XOR operations to an output data of the requested operation applied to the first and second input data (X1, X2) and to each mask parameter of the resultant mask set, an error being detected when XOR operations applied to two data in the output set provide different data.

8. The method of one of claims 1 to 7, wherein the first input data is generated by operations comprising a bit permutation operation (EXP, RPM) by which bits of an input data are mixed, the method comprising applying the bit permutation operation to all data in a third input set (PX2<r>, PX5<r>) in which each data in combined by XOR operations (⊕) to one the first mask parameters (U[I]) in the first mask set (U), an output of the bit permutation operation comprising an output set (PX3<r>, PX6<r>) comprising all data resulting from the application of the bit permutation operation to one of the data in the third input set, the first mask set being generated so that each data in the output set of the bit permutation operation comprises at least two words, the words in the output set having a same size and forming an output word subset comprising a single word from each data in the output set and a same number of occurrences of all possible values of the words in the output word subset.

9. A method for encrypting or decrypting an input data (X1, Y1) according to a cryptographic algorithm comprising an operation (XG5, XG12) combining a first and a second input data, wherein the operation is performed according to the method of one of claims 1 to 8.

10. The method of claim 9, wherein the cryptographic algorithm conforms with the Advanced Encryption Standard (AES) algorithm, the method comprising:

generating an input set (PX20) by applying XOR operations (XG4, XG1) to each word (X1[b]) of the input data (X1), to each mask parameter (U[l]) of the first mask set (U), and to a word of a secret key (KT[b]) corresponding the word of the input data;

performing several intermediate rounds, each comprising:

performing a substitution operation (SBB) using masked substitution tables (SBM) providing a substitution output set (PX3<r>) in which each word is masked by a respective mask parameter (V[l]) of the second mask set (V),

computing a masked round output set (PX2<r>) by applying XOR operations to each word (PX6<r>[l]) of a round set (PX6<r>) masked by a respective mask parameter (V[l]) of the second mask set, to a respective mask parameter (U[l]) of the first mask set and to a respective mask parameter of the second mask set, and using the masked round output set as an input set for a next round;

providing an output set (PX7<R>]) in which each word is masked by a respective mask parameter of the first mask set.

11. The method of claim 9, wherein the cryptographic algorithm conforms with the Advanced Encryption Standard (DES) algorithm, the method comprising:

generating an input set (PY2<0>) by applying XOR operations (XG14, XG15) to each word (Y2L[b], Y2R[b]) of a result data (Y2) provided by an initial bit permutation operation (IPM), and to each mask parameter (U[l]) of the first mask set (U);

performing several intermediate rounds, each comprising:

performing an expansive bit permutation (EXP) applied at a first round to the input set and at subsequent rounds to a round output set (PY2<r>), the first mask set (U) being generated so that each data in a bit permutation output set (PY3<r>, PY6<r>) of the bit permutation operation comprises at least two words, the words in the output set having a same size and forming an output word subset comprising a single word from each data in the output set and a same number of occurrences of all possible values of the words in the output word subset;

performing a substitution operation (SDS) using masked substitution tables (SB1) providing a substitution output set (PY5<r>) in which each word is masked by a respective mask parameter of the second mask set (V),

computing a masked round output set (PY2<r>) by applying XOR operations to each word of a round set (PY7<r>) masked by respective mask parameters of the first and second mask sets (U, V), and to a respective mask parameter of the second mask set; and

providing an output set (PY7<R>) in which each word is masked by a respective mask parameter of the first mask set.

12. A circuit (CT1) comprising a processor (PRC) and configured to implement the method according to one of claims 1 to 11.

13. The circuit of claim 12, comprising a coprocessor (CP2).

14. A device comprising a circuit according to claim 12 or 13, arranged on a medium (HD).

15. A computer program product loadable into a computer memory and comprising code portions which when executed by a computer configure the computer to carry out the steps of the method according to one of claims 1 to 11.

**Patentansprüche**

1. Verfahren zum Ausführen eines angeforderten Ablaufs (OPR, XG5, XG12) durch eine Schaltung (CT1, CT2, CT3), wodurch erste Eingabedaten (X1) mit zweiten Eingabedaten (X2) kombiniert werden, wobei das Verfahren Folgendes umfasst:

Berechnen eines ersten Eingabesatzes (PX1), der die ersten Eingabedaten umfasst, durch Anwenden von exklusiven ODER(XOR)-Abläufen (⊕) auf den ersten Eingabedaten und auf allen ersten Maskenparametern (U[I]) in einem ersten Maskensatz (U),

**dadurch gekennzeichnet, dass** er Folgendes umfasst:

Erzeugen eines zweiten Maskensatzes (V), der zweite Maskenparameter (V[I]) umfasst, wobei jeder erste Maskenparameter (U[I]) in dem ersten Maskensatz (U) ein jeweiliges Maskenpaar (U[I], V[I]) mit einem entsprechenden zweiten Maskenparameter in dem zweiten Maskensatz ausbildet, wobei die Maskenpaare derart sind, dass Kombinationen durch XOR-Abläufe des ersten Maskenparameters mit dem zweiten Maskenparameter in jedem Maskenpaar einen dritten Maskensatz herstellen, der dritte Maskenparameter umfasst, wobei die Maskenparameter in jedem der ersten, der zweiten und der dritten Maskensätze derart sind, dass jeder Maskenparameter in dem Maskensatz wenigstens ein erstes Wort umfasst, wobei die ersten Wörter in dem Maskensatz dieselbe Größe aufweisen und eine Wortuntermenge ausbilden, die ein einzelnes Wort von jedem Maskenparameter in dem Maskensatz und eine selben Anzahl von Vorkommen aller möglichen Werte eines Wortes umfasst, das die Größe der ersten Wörter aufweist;

Berechnen eines zweiten Eingabesatzes (PX2), der die zweiten Eingabedaten umfasst, durch Anwenden von XOR-Abläufen auf die zweiten Eingabedaten und auf alle zweiten Maskenparameter in dem zweiten Maskensatz, wobei alle Daten in dem ersten Eingabesatz mit jeweiligen Daten in dem zweiten Eingabesatz in einem jeweiligen Eingabepaar derart verknüpft sind, dass die Maskenparameter, aus denen alle Daten in jedem Eingabepaar berechnet werden, durch eines der Maskenpaare verknüpft sind;

Anwenden des angeforderten Ablaufs auf jedem Eingabepaar, um Ausgabedaten (PR1[..], PX2<r>[I], PY7<r>[I]) zu berechnen; und

Bereitstellen eines Ausgabesatzes (PR1, PX2<r>, PY7<r>) des angeforderten Ablaufs, der alle berechneten Ausgabedaten umfasst.

2. Verfahren nach Anspruch 1, wobei der angeforderte Ablauf ein Exklusiv-ODER ist.

3. Verfahren nach einem der Ansprüche 1 bis 2, wobei der erste und der zweite Maskensatz (U1, V1) aus einem ersten Paar (U0, V0) von ersten und zweiten Permutationen von Wörtern erzeugt werden, die jede dieselbe Anzahl von Vorkommen aller möglicher Werte der Wörter derart umfassen, dass die Kombination jedes Wortes in der ersten Permutation durch XOR-Abläufe mit einem jeweiligen Wort der zweiten Permutation eine resultierende Permutation bereitstellt, die Wörter und die gleiche Anzahl von Vorkommen aller möglichen Werte der Wörter umfasst, wobei der erste und der zweite Maskensatz unter Verwendung der folgenden Gleichungen erzeugt werden:

$$U1[I] = PM(u1[I] \oplus UR)$$

und

$$V1[I] = PM(v1[I] \oplus VR)$$

oder

$$U1[I] = PM(u1[I]) \oplus UR$$

und

$$V1[I] = PM(v1[I]) \oplus VR,$$

wobei für jeden Index I, bei dem UR und VR Zufallswörter der Größe eines der Maskenparameter U1[I] oder V1[I] sind, u1 und v1 zuvor berechnete Sätze sind, die durch die Gleichungen erhalten wurden, beziehungsweise gleich den Maskensätzen von dem ersten Paar sind und PM eine zufällig ausgewählte Permutation ist, die auf die Sätze u1 und v1 angewendet wird.

4. Verfahren nach einem der Ansprüche 1 bis 3, wobei alle zweiten Eingabedaten in dem zweiten Eingabesatz in einer jeweiligen maskierten Substitutionstabelle durch einen Substitutionsablauf ausgewählt sind, wobei die maskierten Substitutionstabellen (SBM, SB1) aus einer Eingabesubstitutionstabelle (SBX, SBD) erzeugt werden und eine maskierte Substitutionstabelle (SBM[I]) für jeden der ersten Maskenparameter (U[I]) in dem ersten Maskensatz (U) und den entsprechenden zweiten Maskenparameter (V[I]) in dem zweiten Maskensatz (V) umfassen.

5. Verfahren nach Anspruch 4, wobei die maskierten Substitutionstabellen durch Folgendes erzeugt werden:

Erzeugen des ersten Maskensatzes (U);
Erzeugen des zweiten Maskensatzes (V), der eine Anzahl von zweiten Maskenparametern umfasst, die gleich der Anzahl von Werten in der Eingabesubstitutionstabelle (SBX, SBD) ist;
einmaliges Auswählen jedes Maskenparameters in dem ersten und dem zweiten Maskensatz, um Maskenpaare auszubilden, die jeweils einen der ersten Maskenparameter und einen der zweiten Maskenparameter umfassen;
Erzeugen für jeden Maskenparameter in dem ersten Maskensatz einer der maskierten Substitutionstabellen (SBM[I], SB1[I]), wobei eine Erzeugung jeder der maskierten Substitutionstabellen Folgendes umfasst:
Auswählen aller Daten in der Eingabesubstitutionstabelle und für alle ausgewählten Daten (SB[i], SB[i$\oplus$ U[I]]):

Berechnen maskierter Daten (SB[i]$\oplus$ V[I], SB[i $\oplus$ U[I]] $\oplus$ V[I]) durch Anwenden von XOR-Abläufen auf die ausgewählten Daten und auf den zweiten Maskenparameter (V[I]), der dem ersten Maskenparameter oder einem transformierten Wert (P(V)) davon entspricht;
Berechnen eines maskierten Index (i$\oplus$ U[m]) durch Anwenden von XOR-Abläufen auf einen ursprünglichen Index (i) und auf den ersten Maskenparameter (U[I]) oder einen transformierten Wert davon (E(U)); und
Speichern der maskierten Daten in der maskierten Substitutionstabelle, wobei die ausgewählten Daten auf dem ursprünglichen Index ausgewählt werden und die maskierten Daten auf dem maskierten Index gespeichert werden oder die ausgewählten Daten auf dem maskierten Index ausgewählt werden und die maskierten Daten auf dem ursprünglichen Index gespeichert werden.

6. Verfahren nach einem der Ansprüche 1 bis 5, wobei die Berechnungen der Daten in dem Ausgabesatz (PCX, PX2<r>, PY7<r>) in einer zufälligen Reihenfolge durchgeführt werden.

7. Verfahren nach einem der Ansprüche 1 bis 6, wobei alle Ausgabedaten in dem Ausgabesatz (PCX, PX2<r>, PY7<r>) wenigstens ein Wort umfassen, wobei die Wörter in dem Ausgabesatz dieselbe Größe aufweisen und eine Ausgabewortuntermenge ausbilden, die ein einzelnes Wort aus allen Ausgabedaten in dem Ausgabesatz und eine selbe Anzahl von Vorkommen aller möglichen Werte der Wörter umfasst, wobei das Verfahren Folgendes umfasst:

Erfassen eines Wortes, das eine Anzahl von Vorkommen aufweist, die sich von der Anzahl von Vorkommen anderer Wörter in der Ausgabewortuntermenge unterscheidet, in der Ausgabewortuntermenge, wobei ein Fehler erfasst wird, wenn zwei Wörter mit unterschiedlicher Anzahl von Vorkommen in der Wortausgabeuntermenge gefunden werden, oder
Kombinieren durch XOR-Abläufe aller Daten in dem Ausgabesatz mit einem jeweiligen Maskenparameter eines resultierenden Maskensatzes derart, dass der Ausgabesatz Daten umfasst, die aus der Anwendung von XOR-Abläufen auf Ausgabedaten des angeforderten Ablaufs resultieren, die auf die ersten und die zweiten Eingabedaten (X1, X2) und auf jeden Maskenparameter des resultierenden Maskensatzes angewendet werden, wobei ein Fehler erfasst wird, wenn XOR-Abläufe, die auf zwei Daten in dem Ausgabesatz angewendet werden, unterschiedliche Daten bereitstellen.

8. Verfahren nach einem der Ansprüche 1 bis 7, wobei die ersten Eingabedaten durch Abläufe erzeugt werden, die einen Bitpermutationsablauf (EXP, RPM) umfassen, durch den Bits von Eingabedaten gemischt werden, wobei das Verfahren das Anwenden des Bitpermutationsablaufs auf alle Daten in einem dritten Eingabesatz (PX2<r>, PX5<r>) umfasst, in der alle Daten durch XOR-Abläufe ($\oplus$) mit einem der ersten Maskenparameter (U[I]) in dem ersten Maskensatz (U) kombiniert werden, wobei eine Ausgabe des Bitpermutationsablaufs einen Ausgabesatz (PX3<r>, PX6<r>) umfasst, der alle Daten umfasst, die aus dem Anwenden des Bitpermutationsablaufs auf eines der Daten in dem dritten Eingabesatz resultieren, wobei der erste Maskensatz erzeugt wird, so dass alle Daten in dem Ausgabesatz des Bitpermutationsablaufs wenigstens zwei Wörter umfassen, wobei die Wörter in dem Ausgabesatz dieselbe Größe aufweisen und eine Ausgabewortuntermenge ausbilden, die ein einzelnes Wort aus allen Daten in dem Ausgabesatz und eine selbe Anzahl von Vorkommen aller möglichen Werte der Wörter in der Ausgabewortuntermenge umfasst.

9. Verfahren zum Verschlüsseln oder Entschlüsseln von Eingabedaten (X1, Y1) gemäß einem kryptografischen Algorithmus, das einen Ablauf (XG5, XG12) umfasst, der erste und zweite Eingabedaten kombiniert, wobei der Ablauf gemäß dem Verfahren nach einem der Ansprüche 1 bis 8 durchgeführt wird.

10. Verfahren nach Anspruch 9, wobei der kryptografische Algorithmus mit dem vorgesetzten Verschlüsselungsstandard(*Advanced Encryption Standard* - AES)-Algorithmus übereinstimmt, wobei das Verfahren Folgendes umfasst:

Erzeugen eines Eingabesatzes (PX20) durch Anwenden von XOR-Abläufen (XG4, XG1) auf jedes Wort (X1[b]) der Eingabedaten (X1), auf jeden Maskenparameter (U[I]) des ersten Maskensatzes (U) und auf ein Wort eines geheimen Schlüssels (KT[b]), das dem Wort der Eingabedaten entspricht;
Durchführen mehrerer Zwischenrunden, die jeweils Folgendes umfassen:

Durchführen eines Substitutionsablaufs (SBB) unter Verwendung von maskierten Substitutionstabellen (SBM), die einen Substitutionsausgabesatz (PX3<r>) bereitstellen, in dem jedes Wort durch einen jeweiligen Maskenparameter (V[I]) des zweiten Maskensatzes (V) maskiert ist,
Berechnen eines maskierten runden Ausgabesatzes (PX2<r>) durch Anwenden von XOR-Abläufen auf jedes Wort (PX6<r>[I]) eines runden Satzes (PX6<r>), der durch einen jeweiligen Maskenparameter (V[I]) des zweiten Maskensatzes maskiert ist, auf einen jeweiligen Maskenparameter (U[I]) des ersten Maskensatzes und auf einen jeweiligen Maskenparameter des zweiten Maskensatzes, und
Verwenden des maskierten runden Ausgabesatzes als Eingabesatz für eine nächste Runde;

Bereitstellen eines Ausgabesatzes (PX7<R>]), in dem jedes Wort durch einen jeweiligen Maskenparameter des ersten Maskensatzes maskiert wird.

11. Verfahren nach Anspruch 9, wobei der kryptografische Algorithmus mit dem vorgesetzten Verschlüsselungsstandard(DES)-Algorithmus übereinstimmt, wobei das Verfahren Folgendes umfasst:

Erzeugen eines Eingabesatzes (PY2<0>) durch Anwenden von XOR-Abläufen (XG14, XG15) auf jedes Wort (Y2L[b], Y2R[b]) von Ergebnisdaten (Y2), die durch einen anfänglichen Bitpermutationsablauf (IPM) bereitgestellt werden, und auf jeden Maskenparameter (U[I]) des ersten Maskensatzes (U);
Durchführen mehrerer Zwischenrunden, die jeweils Folgendes umfassen:

Durchführen einer expansiven Bitpermutation (EXP), die in einer ersten Runde auf den Eingabesatz und in nachfolgenden Runden auf einen runden Ausgabesatz (PY2<r>) angewendet wird, wobei der erste Maskensatz (U) erzeugt wird, so dass alle Daten in einem Bitpermutationausgabesatz (PY3<r>, PY6<r>) des Bitpermutationsablaufs wenigstens zwei Wörter umfassen, wobei die Wörter in dem Ausgabesatz dieselbe Größe aufweisen und eine Ausgabewortuntermenge ausbilden, die ein einzelnes Wort aus allen Daten in dem Ausgabesatz und dieselbe Anzahl von Vorkommen aller möglichen Werte der Wörter in der Ausgabewortuntermenge umfasst;
Durchführen eines Substitutionsablaufs (SDS) unter Verwendung maskierter Substitutionstabellen (SB1), die einen Substitutionsausgabesatz (PY5<r>) bereitstellen, in dem jedes Wort durch einen jeweiligen Maskenparameter des zweiten Maskensatzes (V) maskiert ist,
Berechnen eines maskierten runden Ausgabesatzes (PY2<r>) durch Anwenden von XOR-Abläufen auf jedes Wort eines runden Satzes (PY7<r>), der durch die jeweiligen Maskenparameter des ersten und des zweiten Maskensatzes (U, V) maskiert ist, und auf einen jeweiligen Maskenparameter des zweiten Maskensatzes; und

Bereitstellen eines Ausgabesatzes (PY7<R>), in dem jedes Wort durch einen jeweiligen Maskenparameter des ersten Maskensatzes maskiert ist.

12. Schaltung (CT1), die einen Prozessor (PRC) umfasst und konfiguriert ist, um das Verfahren nach einem der Ansprüche 1 bis 11 zu implementieren.

13. Schaltung nach Anspruch 12, die einen Coprozessor (CP2) umfasst.

14. Vorrichtung, die eine Schaltung nach Anspruch 12 oder 13, die auf einem Medium (HD) angeordnet ist, umfasst.

15. Computerprogrammprodukt, das in einen Speicher eines Computers geladen werden kann und Codeabschnitte umfasst, die, wenn sie durch einen Computer ausgeführt werden, den Computer konfigurieren, um die Schritte des Verfahrens nach einem der Ansprüche 1 bis 11 zu vollziehen.

**Revendications**

1. Procédé pour exécuter par un circuit (CT1, CT2, CT3) une opération demandée (OPR, XG5, XG12) par laquelle une première donnée d'entrée (X1) est combinée avec une deuxième donnée d'entrée (X2), le procédé comprenant les étapes suivantes :

   calculer un premier ensemble d'entrées (PX1) comprenant la première donnée d'entrée, en appliquant des opérations OU exclusif (XOR) ($\oplus$) à la première donnée d'entrée et à tous les premiers paramètres de masque (U[I]) d'un premier ensemble de masques (U),
   **caractérisé en ce qu'**il comprend les étapes suivantes :

   générer un deuxième ensemble de masques (V) comprenant des deuxièmes paramètres de masque (V[I]), chaque premier paramètre de masque (U[I]) dans le premier ensemble de masques (U) formant une paire de masques respective (U[I], V[I]) avec un deuxième paramètre de masque correspondant dans le deuxième ensemble de masques, les paires de masques étant telles que des combinaisons par des opérations OU exclusif du premier paramètre de masque avec le deuxième paramètre de masque dans chaque paire de masques produisent un troisième ensemble de masques comprenant des troisièmes paramètres de masque, les paramètres de masque dans chacun des premier, deuxième et troisième ensembles de masques étant tels que chaque paramètre de masque dans l'ensemble de masques comprend au moins un premier mot, les premiers mots de l'ensemble de masques ayant une même taille et formant un sous-ensemble de mots comprenant un seul mot de chaque paramètre de masque dans l'ensemble de masques et un même nombre d'occurrences de toutes les valeurs possibles d'un mot ayant la taille des premiers mots ;
   calculer un deuxième ensemble d'entrées (PX2) comprenant la deuxième donnée d'entrée, en appliquant des opérations OU exclusif à la deuxième donnée d'entrée et à tous les paramètres de masque du deuxième ensemble de masques, chaque donnée du premier ensemble d'entrées étant associée à une donnée respective du deuxième ensemble d'entrées dans une paire d'entrées respective, de sorte que les paramètres de masque à partir desquels chaque donnée de chaque paire d'entrées est calculée sont associés par l'une des paires de masques ;
   appliquer l'opération demandée à chaque paire d'entrées pour calculer des données de sortie (PR1 [...], PX2<r>[I], PY7<r>[I]) ; et
   fournir un ensemble de sorties (PR1, PX2<r>, PY7<r>) de l'opération demandée comprenant toutes les données de sortie calculées.

2. Procédé selon la revendication 1, dans lequel l'opération demandée est un OU exclusif.

3. Procédé selon l'une des revendications 1 à 2, dans lequel les premier et deuxième ensembles de masques (U1, V1) sont générés à partir d'une première paire (U0, V0) de première et deuxième permutations de mots, chacune comprenant un même nombre d'occurrences de toutes les valeurs possibles des mots, de sorte que la combinaison par des opérations OU exclusif de chaque mot dans la première permutation avec un mot respectif de la deuxième permutation fournit une permutation résultante comprenant des mots, et le même nombre d'occurrences de toutes les valeurs possibles des mots, les premier et deuxième ensembles de masques étant générés en utilisant les équations suivantes :

$$U1[I] = PM(u1[I] \oplus UR),$$

et

$$V1[I] = PM(v1[I] \oplus VR),$$

ou

$$U1[I] = PM(u1[I]) \oplus UR,$$

et

$$V1[I] = PM(v1[I]) \oplus VR,$$

pour chaque indice I, où UR et VR sont des mots aléatoires de la taille de l'un des paramètres de masque U1[I] ou V1[I], u1 et v1 sont des ensembles calculés préalablement obtenus par les équations, ou égaux aux ensembles de masques de la première paire respectivement, et PM est une permutation choisie au hasard appliquée aux ensembles u1 et v1.

4. Procédé selon l'une des revendications 1 à 3, dans lequel chaque deuxième donnée d'entrée du deuxième ensemble d'entrées est sélectionnée dans une table de substitution masquée respective par une opération de substitution, les tables de substitution masquées (SBM, SB1) étant générées à partir d'une table de substitution d'entrée (SBX, SBD) et comprenant une table de substitution masquée (SBM[I]) pour chacun des premiers paramètres de masque (U[I]) dans le premier ensemble de masques (U) et le deuxième paramètre de masque correspondant (V[I]) dans le deuxième ensemble de masques (V).

5. Procédé selon la revendication 4, dans lequel les tables de substitution masquées sont générées par les étapes suivantes :

générer le premier ensemble de masques (U) ;
générer le deuxième ensemble de masques (V) comprenant un nombre de deuxièmes paramètres de masque égal au nombre de valeurs dans la table de substitution d'entrée (SBX, SBD) ;
sélectionner une fois chaque paramètre de masque dans les premier et deuxième ensembles de masques pour former des paires de masques, chacune comprenant un des paramètres du premier masque et un des paramètres du deuxième masque ;
générer pour chaque paramètre de masque du premier ensemble de masques de l'une des tables de substitution masquées (SBM[I], SB1[I]), la génération de chacune des tables de substitution masquées comprenant les étapes suivantes :
sélectionner chaque donnée dans la table de substitution d'entrée, et pour chaque donnée sélectionnée (SB[i], SB[i$\oplus$ U[I]) :

calculer une donnée masquée (SB[i] $\oplus$ V[I], SB[i $\oplus$ U[I]] $\oplus$ V[I]) en appliquant des opérations OU exclusif aux données sélectionnées et au deuxième paramètre de masque (V[I]) correspondant au premier paramètre de masque ou à une valeur transformée (P(V)) de celui-ci ;
calculer un indice masqué (i $\oplus$ U[m]) en appliquant des opérations OU exclusif à un indice original (i) et au premier paramètre de masque (U[I]) ou à une valeur transformée de celui-ci (E(U)) ; et
stocker des données masquées dans la table de substitution masqué, les données sélectionnées étant sélectionnées à l'index d'origine et les données masquées étant stockées à l'index masqué, ou les données sélectionnées étant sélectionnées à l'index masqué et les données masquées étant stockées à l'index d'origine.

6. Procédé selon l'une des revendications 1 à 5, dans lequel les calculs des données dans l'ensemble de sorties (PCX, PX2<r>, PY7<r>) sont effectués dans un ordre aléatoire.

7. Procédé selon l'une des revendications 1 à 6, dans lequel chaque donnée de sortie dans l'ensemble de sorties (PCX, PX2<r>, PY7<r>) comprend au moins un mot, les mots dans l'ensemble de sorties ayant une même taille et formant un sous-ensemble de mots de sortie comprenant un seul mot de chaque donnée de sortie dans l'ensemble de sorties et un même nombre d'occurrences de toutes les valeurs possibles des mots, le procédé comprenant les étapes suivantes :

détecter dans le sous-ensemble de mots de sortie d'un mot ayant un nombre d'occurrences différent du nombre d'occurrences des autres mots du sous-ensemble de mots de sortie, une erreur étant détectée lorsque deux mots ayant des nombres d'occurrences différents sont trouvés dans le sous-ensemble de mots de sortie, ou

combiner par des opérations OU exclusif chaque donnée de l'ensemble de sorties avec un paramètre de masque respectif d'un ensemble de masques résultant de sorte que l'ensemble de sorties comprend les données résultant de l'application d'opérations OU exclusif à une donnée de sortie de l'opération demandée appliquée aux première et deuxième données d'entrée (X1, X2) et à chaque paramètre de masque de l'ensemble de masques résultant, une erreur étant détectée lorsque des opérations OU exclusif appliquées à deux données de l'ensemble de sorties fournissent des données différentes.

8. Procédé selon l'une des revendications 1 à 7, dans lequel la première donnée d'entrée est générée par des opérations comprenant une opération de permutation de bits (EXP, RPM) par laquelle les bits d'une donnée d'entrée sont mélangés, le procédé comprenant l'application de l'opération de permutation de bits à toutes les données dans un troisième ensemble d'entrées (PX2<r> , PX5<r>) dans lequel chaque donnée est combinée par des opérations OU exclusif ( $\oplus$ ) à l'un des premiers paramètres de masque (U[I]) dans le premier ensemble de masques (U), une sortie de l'opération de permutation de bits comprenant un ensemble de sorties (PX3<r>PX6<r>) comprenant toutes les données résultant de l'application de l'opération de permutation de bits à l'une des données du troisième ensemble d'entrées, le premier ensemble de masques étant généré de telle sorte que chaque donnée de l'ensemble de sorties de l'opération de permutation de bits comprenne au moins deux mots, les mots de l'ensemble de sorties ayant une même taille et formant un sous-ensemble de mots de sortie comprenant un seul mot de chaque donnée de l'ensemble de sorties et un même nombre d'occurrences de toutes les valeurs possibles des mots du sous-ensemble de mots de sortie.

9. Procédé de chiffrement ou de déchiffrement d'une donnée d'entrée (X1, Y1) selon un algorithme cryptographique comprenant une opération (XG5, XG12) combinant une première et une deuxième données d'entrée, **caractérisé en ce que** l'opération est effectuée selon le procédé de l'une des revendications 1 à 8.

10. Procédé selon la revendication 9, dans lequel l'algorithme cryptographique est conforme à l'algorithme AES (Advanced Encryption Standard), le procédé comprenant les étapes suivantes :

générer un ensemble d'entrées (PX20) en appliquant des opérations OU exclusif (XG4, XG1) à chaque mot (X1[b]) des données d'entrée (X1), à chaque paramètre de masque (U[I]) du premier ensemble de masques (U), et à un mot d'une clé secrète (KT[b]) correspondant au mot des données d'entrée ;
effectuer plusieurs rondes intermédiaires, comprenant chacune les étapes suivantes :

effectuer une opération de substitution (SBB) en utilisant des tables de substitution masquées (SBM) fournissant un ensemble de sorties de substitution (PX3<r>) dans lequel chaque mot est masqué par un paramètre de masque respectif (V[I]) du deuxième ensemble de masques (V),
calculer un ensemble de sorties de ronde masquée (PX2<r>) en appliquant des opérations OU exclusif à chaque mot (PX6<r>[I]) d'un ensemble de ronde (PX6<r>) masquée par un paramètre de masque respectif (V[I]) du deuxième ensemble de masques, à un paramètre de masque respectif (U[I]) du premier ensemble de masques et à un paramètre de masque respectif du deuxième ensemble de masques, et
utiliser l'ensemble de sorties de ronde masquée comme ensemble d'entrées pour une ronde suivante ;

fournir un ensemble de sorties (PX7<R>) dans lequel chaque mot est masqué par un paramètre de masque respectif du premier ensemble de masques.

11. Procédé selon la revendication 9, dans lequel l'algorithme cryptographique est conforme à l'algorithme DES (Advanced Encryption Standard), le procédé comprenant les étapes suivantes :

générer un ensemble d'entrées (PY2<0>) en appliquant des opérations OU exclusif (XG14, XG15) à chaque mot (Y2L[b], Y2R[b]) d'une donnée de résultat (Y2) fournie par une opération initiale de permutation de bits (IPM), et à chaque paramètre de masque (U[I]) du premier ensemble de masques (U) ;
effectuer plusieurs rondes intermédiaires, comprenant chacune les étapes suivantes :

effectuer une permutation de bits expansive (EXP) appliquée dans une première ronde à l'ensemble d'entrées et dans des rondes ultérieures à un ensemble de sorties (PY2<r>), le premier ensemble de masques (U) étant généré de sorte que chaque donnée d'un ensemble de sorties à permutation de bits (PY3<r>, PY6<r>) de l'opération de permutation de bits comprenne au moins deux mots, les mots de l'ensemble de sorties ayant une même taille et formant un sous-ensemble de mots de sortie comprenant un seul mot de chaque donnée de l'ensemble de sorties et un même nombre d'occurrences de toutes les valeurs possibles des mots du sous-ensemble de mots de sortie ;

effectuer une opération de substitution (SDS) en utilisant des tables de substitution masquées (SB1) fournissant un ensemble de sorties de substitution (PY5<r>) dans lequel chaque mot est masqué par un paramètre de masque respectif du deuxième ensemble de masques (V),

calculer un ensemble de sorties de ronde masquée (PY2<r>) en appliquant des opérations OU exclusif à chaque mot d'un ensemble de ronde (PY7<r>) masqué par les paramètres de masque respectifs des premier et deuxième ensembles de masques (U, V), et à un paramètre de masque respectif du deuxième ensemble de masques ; et

fournir un ensemble de sorties (PY7<R>) dans lequel chaque mot est masqué par un paramètre de masque respectif du premier ensemble de masques.

12. Circuit (CT1) comprenant un processeur (PRC) et configuré pour mettre en œuvre le procédé selon l'une des revendications 1 à 11.

13. Circuit selon la revendication 12, comprenant un coprocesseur (CP2).

14. Dispositif comprenant un circuit selon la revendication 12 ou 13, agencé sur un support (HD).

15. Produit programme d'ordinateur pouvant être chargé dans une mémoire d'ordinateur et comprenant des parties de code qui, lorsqu'elles sont exécutées par un ordinateur, configurent l'ordinateur pour exécuter les étapes du procédé selon l'une des revendications 1 à 11.

Fig. 1

Fig. 2

S11 — RN = RND(0,W)

S12 — I=0

S13 — MSK = I ⊕ RN

PX[I] = X ⊕ MSK

S14

I += 1 — S15

S16 — I > W ?

N

Y

S17 — Ret. PX

Fig. 3

U[0]
U[1]
⋮
U[n]
⋮
U[W]

MSK

X

PX[0]
PX[1]
⋮
PX[n]
⋮
PX[W]

PX

Fig. 4

PX1

PX[0]
PX[1]
⋮
PX[n]
⋮
PX[W]

X2

OPR

PR[0]
PR[1]
⋮
PR[n]
⋮
PR[W]

PR

Fig. 5

PX1

X1⊕U[0]
X1⊕U[1]
⋮
X1⊕U[n]
⋮
X1⊕U[W]

X2⊕V[0]
X2⊕V[1]
⋮
X2⊕V[n]
⋮
X2⊕V[W]

PX2

OPR

P1⊕Z[0]
P1⊕Z[1]
⋮
P1⊕Z[n]
⋮
P1⊕Z[W]

PR1

Fig. 6

Fig. 7

Fig. 8

S21 — SBX[0..W]

KX = (W+1)(W+1)-1
U = F1(U0), V = F1(V0)
S22 — PM[..] = RNP(0,KX)

S23 — k=0

## Fig. 9

S24 — i = INT(PM[k]/(W+1))
j = PM[k]-i(W+1)

SBM[i,j] = SBX[j⊕U[i]]⊕V[i]

S27 — N
k > KX ?          k += 1 — S26          S25

Y

Ret. SBM[0..W,0..W] — S28

i ····▶
⊕
V[I]
SBX

i ◀···· 
◀···· i⊕U[I]
SBM[I]

## Fig. 10A

V[I]
i ····▶
⊕
i⊕U[I] ····▶
SBX

i ◀····
SBM[I]

## Fig. 10B

SBX

| SB[0] | → | SBM[0,0] | SBM[0,1] | • • • | SBM[0,W] |
| SB[1] | | SBM[1,0] | SBM[1,1] | | SBM[1,W] |
| ⋮ | | ⋮ | | | ⋮ |
| SB[W] | | SBM[W,0] | SBM[W,1] | • • • | SBM[W,W] |

SBM

## Fig. 10C

Fig. 11

S31 — PX10[0..W,0..W4]
KT[0,0..W4]

S32 — KX=(W+1)(W4+1)-1
PM[..] = RNP(0,KX)

S33 — k=0

S34 — l=INT(PM[k]/(W4+1))
b=PM[k]-l(W4+1)

PX20[l,b] = PX10[l,b]⊕KT[0,b]

S35

S37 — N
k > KX ?

k += 1

S36

Y
Ret. PX20[0..W,0..W4] — S38

S41 — PX2r[0..W,0..W4]
SBM[0..W,0..W]

S42 — KX = (W+1)(W4+1)-1
PM[..] = RNP(0,KX)

S43 — k=0

S44 — l = INT(PM[k]/(W4+1))
b = PM[k]-l(W4+1)

PX3r[l,b] = SBM[l,PX2r[l,b]]

S45

S47 — N
k > KX ?

k += 1

S46

Y
Ret. PX3r[0..W,0..W4] — S48

Fig. 12

X3

| X0 | X4 | X8 | X12 |
|----|----|-----|-----|
| X1 | X5 | X9 | X13 |
| X2 | X6 | X10 | X14 |
| X3 | X7 | X11 | X15 |

XG6

MXC

| 2 | 3 | 1 | 1 |
|---|---|---|---|
| 1 | 2 | 3 | 1 |
| 1 | 1 | 2 | 3 |
| 3 | 1 | 1 | 2 |

MC     TR

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

## Fig. 13

PX4r[W]     PX4r

| X0 | X4 | X8 | X12 |
|----|----|-----|-----|
| X1 | X5 | X9 | X13 |
| X2 | X6 | X10 | X14 |
| X3 | X7 | X11 | X15 |

XG6

MXC

| 2 | 3 | 1 | 1 |
|---|---|---|---|
| 1 | 2 | 3 | 1 |
| 1 | 1 | 2 | 3 |
| 3 | 1 | 1 | 2 |

PX4j[0]     MC

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

PX5r[0]     PX5r
PX5r[W]     Fig. 14

Fig. 15

Fig. 16

SBD[0..W3,0..W6]
U[0..W]

S71

S72
V1 = F4(U1)
V = V1//F1(V1)//F2(V1)//F3(V1)

**Fig. 17**

S73
I=0

S74
k=0

S75
j=0

S76
SB1[l,k,j] = SBD$[k,j \oplus E(U[l])[k]] \oplus P^{-1}(V[l])[k]$

N

S78
j > W6 ?

S77
j += 1

S70

S79
k += 1

k > W3 ?

N

S71
l += 1

N

S82
l > W ?

Y

Y

Y

Y

S43
Ret. SBM[0..W,0..W3,0..W6]

S91
U1[..] = RNP(0,W)
U2 = F1(U1)
U3 = F2(U1)
U4 = F3(U1)

S92
I=0

S93
MSK = U1[l]//U2[l]//U3[l]//U4[l]

PY2[l] = Y2⊕MSK
S94

Y

S96
I < W ?

I += 1
S95

N

S97
Ret. PY2

**Fig. 18**

| PY2[0.0] | PY2[0.1] | PY2[0.2] | PY2[0.3] |
|----------|----------|----------|----------|
| ⋮ | ⋮ | ⋮ | ⋮ |
| PY2[n.0] | PY2[n.1] | PY2[n.2] | PY2[n.3] |
| ⋮ | ⋮ | ⋮ | ⋮ |
| PY2[W.0] | PY2[W.1] | PY2[W.2] | PY2[W.3] |

PY2<r>, PY2L

P21    P22    P23    P24

**Fig. 19**

**Fig. 20**

PY3<r>

P3[0.k]
P3[1.k]
⋮
P3[n.k]
⋮
P3[W.k]

P3k

KT[j,k]

XG11

⊕

PY4<r>    P4k

P4[0.k]
P4[1.k]
⋮
P4[n.k]
⋮
P4[W.k]

SB1[k]

PY5<r>    P5k

SDS

P5[0.k]
P5[1.k]
⋮
P5[n.k]
⋮
P5[W.k]

S101 — PY7[0..W,0..W2]
V[0..W,0..W2]

S102 — KX = (W+1)(W2+1)-1
PM[..] = RNP(0,KX)

S103 — k=0

S104 — l = INT(PM[k]/(W2+1))
m = PM[k]-l(W2+1)

P2[l.m] = P7[l.m] ⊕ Vm[l]

S107

N

k > KX ?    ← k += 1    S105

Y    S106

Ret. PY7[0..W,0..W2]    S108

**Fig. 21**

X1

IPM

XG3-XG4

⊕ ← U

X2L//X2R

REC2

REC2

REC2

PX2[n]<R>//PX2[n]<R-1>

FPM

CX1

CT5

Fig. 22

DB1          DB2          DBn

IV → ⊕
       XG10

IPM          IPM          IPM

XG3-XG4          XG3-XG4

U → ⊕          ⊕          ⊕

REC2          REC2          REC2

FP

MC

CT4

Fig. 23

Fig. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 1651443
- US 2009074181 A
- US 2008019503 A
- EP 1267514 A

### Non-patent literature cited in the description

- *Advanced Encryption Standard FIPS PUB 197,* 26 November 2001
- Timing attacks on implementations of Diffie-Hellman, RSA, DSS, and other systems. **P. C. KOCHER.** Advances in Cryptology - CRYPTO '96. Lecture Notes in Computer Science, 1996, vol. 1109, 104-113
- Differential Power Analysis. **P. C. KOCHER ; J. JAFFE ; B. JUN.** Advances in Cryptology - CRYPTO '99. Lecture Notes in Computer Science, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004. Lecture Notes in Computer Science, 2004, vol. 3156, 16-29
- ElectroMagnetic Analysis (EMA): Measures and Counter-measures for Smart Cards. **J.-J. QUIS-QUATER.** Smart Card Programming and Security. Springer, 2001, vol. 2140, 200-210
- Template Attacks. **S. CHARI ; J. R. RAO ; P. RO-HATGI.** CHES. LNCS, 2002, vol. 2523, 172-186
- Mutual Information Analysis. **B. GIERLICHS ; L. BATINA ; P. TUYLS ; B. PRENEEL.** CHES 2008. LNCS, 2008, vol. 5154, 426-442
- New Block Cipher: ARIA. **DAESUNG KWON et al.** Information Security and Cryptology - ICISC. series Lecture Notes in Computer Science, 2003, vol. 2971, 432-445